# EUROPÄISCHE PATENTSCHRIFT

(11) **EP 2 293 206 B1**
(45) Veröffentlichungstag und Bekanntmachung des Hinweises auf die Patenterteilung: **26.03.2014**
(21) Anmeldenummer: 10183015.6
(22) Anmeldetag: 06.11.2003
(51) Int. Cl.: G06F 17/30, H04L 12/18, H04N 19/00

(54) **Verfahren und System zum electronischen Übertragen von Informationsdaten über ein hybrides Übertragungsmedium**
Method and system for electronic transmission of information data over a hybrid transmission medium
Procédé et système de transmission electronique de données d'informations sur un support de transmission hybride

(30) Priorität: 07.11.2002 DE 10251890
(43) Veröffentlichungstag der Anmeldung: 09.03.2011
(62) Teilanmeldung aus: 03785499.9
(73) Patentinhaber: Vodafone Holding GmbH, 40213 Düsseldorf (DE)
(72) Erfinder: Rauch, Christian, 82418, Murnau (DE); Hertle, Jochen, 85521, Ottobrunn (DE); Spadinger, Robert, 80804, München (DE)
(74) Vertreter: Müller & Schubert

(56) Entgegenhaltungen:
- WO-A1-02/03728
- WO-A2-02/063865
- KELLERER W STIES P EBERSPÄCHER J: "IP based enhanced data casting services over radio broadcast networks", PROCEEDINGS OF THE INTERNATIONAL SOCIETY FOR OPTICAL ENGINEERING (SPIE), SPIE, USA, 2. Oktober 2000 (2000-10-02), Seiten 195-203, XP002956210, ISSN: 0277-786X
- ARCIDIACONO A: "MULTIMEDIA SERVICES AND DATA BROADCASTING VIA SATELLITE", ELECTRONICS AND COMMUNICATION ENGINEERING JOURNAL, INSTITUTION OF ELECTRICAL ENGINEERS, LONDON, GB, Bd. 9, Nr. 1, 1. Februar 1997 (1997-02-01) , Seiten 33-37, XP000722907, ISSN: 0954-0695
- TOMMO RETI ET AL: "Broadcasting Commercial Data on Mobile Peer-to-Peer Networks", INTERNET CITATION, Mai 2002 (2002-05), XP002403939, Gefunden im Internet: URL:http://www.tml.hut.fi/Research/STAMI/p ublications/Broadcasting Commercial Data on Mobile Peer-to-Peer Networks.pdf [gefunden am 2006-10-20]
- REGIS J CRINON ET AL: "Use of the DSM-CC Data Carousel as a Flexmux in MPEG-2 Transport Stream", 40. MPEG MEETING; 21-07-1997 - 25-07-1997; STOCKHOLM; (MOTION PICTUREEXPERT GROUP OR ISO/IEC JTC1/SC29/WG11),, no. M2587, 23 July 1997 (1997-07-23), XP030031859, ISSN: 0000-0320

## Beschreibung

Die vorliegende Erfindung betrifft zunächst ein Verfahren zum elektronischen Übertragen von Informationsdaten, insbesondere von Informationsdaten in Form von Printmedieninhalten gemäß dem Oberbegriff von Patentanspruch 1. Weiterhin betrifft die Erfindung ein System zum elektronischen Übertragen von Informationsdaten, insbesondere von Informationsdaten in Form von Printmedieninhalten gemäß dem Oberbegriff von Patentanspruch 11.

Eine Grundkomponente eines solchen Verfahrens und Systems stellt ein hybrides Übertragungsnetz dar. Hybride Übertragungsnetze sind an sich bereits bekannt und bestehen in der Regel aus einem digitalen breitbandigen Vorwärtskanal, auch "Broadcast-Kanal" genannt, sowie einem Datenkanal, beispielsweise einem bidirektionalem Datenkanal, über den beispielsweise Interaktionen stattfinden können (Interaktionskanal). Ein hybrides Übertragungsnetz entsteht durch die Kombination wenigstens eines Vorwärtskanals mit wenigstens einem Datenkanal. Auf der Nutzerseite (Kundenseite) des Übertragungsnetzes ist dann ein entsprechendes Endgerät erforderlich.

Ein für ein solches hybrides Übertragungsnetz ausgelegtes System weist in der Regel wenigstens eine zentrale Rechnereinheit, beispielsweise eine Servereinrichtung, wenigstens eine Datenquelle, wenigstens ein Endgerät, wenigstens einen unabhängigen Vorwärtskanal und wenigstens einen unabhängigen Interaktionskanal auf, wobei die zentrale Rechnereinheit und das Endgerät jeweils Schnittstellen zu dem Vorwärtskanal und dem Interaktionskanal aufweisen.

Hybride Übertragungsnetze der genannten Art können für unterschiedlichste Anwendungen eingesetzt werden. Beispielsweise ist es bekannt, derartige Übertragungsnetze im Zusammenhang mit der Übertragung von Informationsdaten, insbesondere von Informationsdaten in Form von Printmedieninhalten, einzusetzen. Eine solche Lösung ist beispielsweise in der Veröffentlichung "Hybrid mobile interactive services combining DVB-T and GPRS", erschienen in "Proceedings EMPCC 2001 (fourth european personal mobile communications conference)", Wien 19. - 22. Februar 2001 von C. Rauch et al. beschrieben. Diese Veröffentlichung beschreibt ein Verfahren sowie ein System zum elektronischen Übertragen von Informationsdaten in Form von Printmedieninhalten über ein hybrides Übertragungsnetz, das wenigstens einen Vorwärtskanal (DVB-T), wenigstens einen Interaktionskanal (GPRS), wenigstens eine zentrale Rechnereinheit, die zumindest zeitweilig mit einer Datenquelle zusammenwirkt, und wenigstens ein einem Nutzer des Systems zugeordnetes Endgerät (elektronische Zeitung) aufweist. Die digitalen Printmedieninhalte werden über den wenigstens einen Vorwärtskanal von der zentralen Rechnereinheit an das wenigstens eine Endgerät übertragen. Weiterhin ist vorgesehen, daß das wenigstens eine Endgerät über den wenigstens einen Interaktionskanal zumindest zeitweilig mit der zentralen Rechnereinheit interagieren kann.

In der WO 02/03728 A1 ist ein Terminal beschrieben, wobei das Terminal eine erste sowie eine zweite Empfangseinheit aufweist. Die erste Empfangseinheit empfängt Signale eines ersten Kommunikationsnetzwerks. Die zweite Empfangseinheit empfängt Signale eines zweiten Kommunikationsnetzwerks. Die Signale, welche über das erste Kommunikationsnetzwerk übertragen werden, sind verschlüsselt. Die Signale, die über das zweite Kommunikationsnetzwerk übertragen werden, sind Signale zum Entschlüsseln der verschlüsselten Signale.

In dem Aufsatz "IP based enhanced Data Casting Services over Radio Broadcast Networks" con Wolfgang Kellerer et al (2000 IEEE 0-7803-6419-8/00) ist beschrieben, dass Informationsdaten über einen Vorwärtskanal übertragen werden, wobei der Vorwärtskanal als Broadcastkanal ausgebildet ist. In den Informationsstrom werden so genannte "Stuffing Packets" eingefügt, die in der Regel leer sind und die bei Bedarf mit bestimmten Daten gefüllt werden können.

In der US Patentanmeldung US 2001/0037348 A1 ist weiterhin ein System zur elektronischen Übertragung von Informationsdaten beschrieben, bei dem Printmedieninhalte, die von einer Anzahl von Autoren veröffentlicht worden sind, zu einer Anzahl von Nutzern übertragen werden. Dieses System weist eine Datenquelle für die Printmedieninhalte auf, in der die veröffentlichten Printmedieninhalte gespeichert sind. Weiterhin ist für jeden Nutzer ein individueller Vertrags-Datensatz vorgesehen, in dem Selektionsinformationen gespeichert sind. Diese Selektionsinformationen werden genutzt, um die vom Nutzer gewünschten Informationsdaten in Form von Printmedieninhalten auszuwählen. In einer zentralen Rechnereinheit werden die auf ein Endgerät eines Nutzers zu übertragenden Informationsdaten auf der Basis der Selektions-Informationsdaten ausgewählt, zusammengestellt und gespeichert. In einem anschließenden Übertragungsschritt werden diese gespeicherten Printmedien-Informationsdaten über ein Übertragungsnetz auf ein dem Nutzer zugeordnetes Endgerät übertragen.

Ausgehend vom genannten Stand der Technik liegt der vorliegenden Erfindung die Aufgabe zugrunde, ein verbessertes Verfahren sowie ein verbessertes System zum elektronischen Übertragen von Informationsdaten bereitzustellen, mit dem Informationsdaten, insbesondere Informationsdaten in Form von Printmedieninhalten, einfach, sicher und in einer für einen Nutzer des Systems attraktiven Weise auf ein diesem zugeordnetes Endgerät übertragen werden können.

Diese Aufgabe wird gelöst durch das Verfahren mit den Merkmalen gemäß dem unabhängigen Patentanspruch 1 sowie das System mit den Merkmalen gemäß dem unabhängigen Patentanspruch 11. Weitere Vorteile, Merkmale, Aspekte, Details und Effekte der Erfindung ergeben sich aus den Unteransprüchen, der Beschreibung sowie den Zeichnungen. Merkmale und Details, die im Zusammenhang mit dem erfindungsgemäßen Verfahren beschrieben sind, gelten dabei selbstverständlich auch im Zusammenhang mit dem erfindungsgemäßen System, und umgekehrt.

Gemäß einem ersten Aspekt wird ein Verfahren bereitgestellt zum elektronischen Übertragen von Informationsdaten, insbesondere von Informationsdaten in Form von Printmedieninhalten, über ein hybrides Übertragungsnetz, das wenigstens einen Vorwärtskanal, wenigstens einen Interaktionskanal, wenigstens eine zentrale Rechnereinheit, die zumindest zeitweilig mit wenigstens einer Datenquelle zusammenwirkt, und wenigstens ein einem Nutzer des System zugeordnetes Endgerät aufweist, wobei die Informationsdaten über den wenigstens einen Vorwärtskanal von der zentralen Rechnereinheit an das wenigstens eine Endgerät übertragen werden und wobei das wenigstens eine Endgerät über den wenigstens einen Interaktionskanal zumindest zeitweilig mit der zentralen Rechnereinheit interagiert. Das Verfahren ist erfindungsgemäß **dadurch** gekennzeichnet, **daß** die Informationsdaten in zwei oder mehr Datenblöcke aufgeteilt werden und daß die Datenblöcke zyklisch über den Vorwärtskanal übertragen werden.

Die Aufteilung der Datenblöcke erfolgt dabei vorzugsweise im Einflußbereich der zentralen Rechnereinheit. Das kann bedeuten, daß die Informationsdaten in ihrer Gesamtheit von der Datenquelle auf die zentrale Rechnereinheit übertragen und dort in die einzelnen Datenblöcke aufgeteilt werden. Ebenso kann vorgesehen sein, daß die einzelnen Datenblöcke bereits in der Datenquelle erzeugt und anschließend als bereits bestehende Datenblöcke auf die zentrale Rechnereinheit übertragen und von dort weiter geleitet werden.

Durch die zyklische Übertragung der verschiedenen Datenblöcke wird es auf einfache Weise möglich, die Informationsdaten über die Zeit zu aktualisieren und die Nutzer jederzeit mit den gewünschten Informationsdaten zu versorgen. Wie dies im Einzelnen geschehen kann, wird anhand nicht ausschließlicher Beispiele im weiteren Verlauf der Beschreibung noch näher erläutert. Weiterhin kann durch die Aufteilung der Informationsdaten in mehrere Datenblöcke, die wiederum zyklisch, das heißt wiederkehrend übertragen werden, eine zuverlässige Datenübertragung realisiert werden. Durch das wiederholte Aussenden der einzelnen Datenblöcke wird sichergestellt, daß ein Endgerät über die Zeit immer vollständige Dateninhalte eines Datenblocks empfangen kann. Sollte einmal ein Datenblock nicht oder nur unvollständig auf ein Endgerät übertragen werden, so können die fehlenden Daten aus diesem Datenblock spätestens im nächsten Zyklus, wenn der betreffende Datenblock erneut übertragen wird, vom Endgerät empfangen werden. Weiterhin ist es durch die Aufteilung von Informationsdaten in Datenblöcke möglich, große und komplexe Datenmengen aufzuteilen und sukzessive zu übertragen. Beispiele hierzu werden im weiteren Verlauf näher erläutert.

Erfindungsgemäß werden die Informationsdaten zumindest teilweise verschlüsselt über den Vorwärtskanal übertragen, wobei verschlüsselte Informationsdaten innerhalb des wenigstens einen Endgeräts zumindest teilweise entschlüsselt werden.

Erfindungsgemäß wird ein Verfahren zum elektronischen Übertragen von Informationsdaten bereitgestellt, insbesondere von Informationsdaten in Form von Printmedieninhalten, über ein hybrides Übertragungsnetz, das wenigstens einen Vorwärtskanal, wenigstens einen Interaktionskanal, wenigstens eine zentrale Rechnereinheit, die zumindest zeitweilig mit wenigstens einer Datenquelle zusammenwirkt, und wenigstens ein einem Nutzer des Systems zugeordnetes Endgerät aufweist, wobei die Informationsdaten über den wenigstens einen Vorwärtskanal von der zentralen Rechnereinheit an das wenigstens eine Endgerät übertragen werden, wobei das wenigstens eine Endgerät über den wenigstens einen Interaktionskanal zumindest zeitweilig mit der zentralen Rechnereinheit interagiert, und wobei die Informationsdaten zumindest teilweise verschlüsselt über den Vorwärtskanal übertragen werden und verschlüsselte Informationsdaten innerhalb des wenigstens einen Endgeräts zumindest teilweise entschlüsselt werden. Das Verfahren ist dadurch gekennzeichnet, die Informationsdaten in zwei oder mehr Datenblöcke aufgeteilt werden und die Datenblöcke zyklisch über den Vorwärtskanal übertragen werden, dass von der zentralen Rechnereinheit Entschlüsselungsinformationen über den Interaktionskanal auf das Endgerät übertragen werden, über die der Umfang festgelegt wird, in welchem dem Nutzer die über den Vorwärtskanal übertragenen Informationsdaten zugänglich gemacht werden und dass mittels der Entschlüsselungsinformationen zumindest ein Bestandteil der über den Vorwärtskanal übertragenen, verschlüsselten Informationsdaten dynamisch je nach Bezugsmodell in dem Endgerät entschlüsselt wird, dass in der zentralen Rechnereinheit zunächst bestimmte Informationsdateninhalte festgelegt werden, die von einem Nutzer auf einen anderen nutzer übertragen werden dürfen, dass die dazu erforderlichen Informationen zusammen mit den entsprechenden Entschlüsselungsinformationen von der zentralen Rechnereinheit auf das Endgerät übertragen werden und dass nur entsprechend markierte Informationsdaten nach der Übertragung auf ein Endgerät von diesem Endgerät mittels eines Übertragungsverfahrens auf wenigstens ein anderes Endgerät übertragen werden.

Eine verschlüsselte Übertragung von Informationsdaten über den Vorwärtskanal hat den Vorteil, daß nur solche Nutzer eines entsprechenden Systems die Informationsdaten nutzen können, die über entsprechende Entschlüsselungsmittel verfügen. Auf diese Weise können die Informationsdaten auf besonders einfache Weise übertragen werden, ohne daß die Gefahr besteht, daß nicht berechtigte Nutzer diese Informationen verwerten können. Weiterhin lassen sich auf diese Weise eine ganze Reihe neuer Bezugsmöglichkeiten für die Informationsdaten realisieren. Je nach Ausgestaltungsvariante des Verfahrens können einzelne Bestandteile oder aber die gesamten Informationsdaten verschlüsselt übertragen werden. Beispiele hierfür werden im weiteren Verlauf der Beschreibung näher erläutert.

Ähnlich wie beim ersten Erfindungsaspekt können die Informationsdaten vorteilhaft in zwei oder mehr Datenblöcke aufgeteilt werden, wobei die Datenblöcke zyklisch über den Vorwärtskanal übertragen werden.

Mit dem erfindungsgemäßen Verfahren ist es auf einfache, sichere, kostengünstige und in einer für den Nutzer attraktiven Weise möglich, Informationsdaten auf Endgeräte von Nutzern zu übertragen.

Beiden Aspekten ist gemeinsam, daß die eigentlichen Inhalte, nämlich die Informationsdaten, in Form von Bringinhalten von der zentralen Rechnereinheit auf die Endgeräte der Nutzer übertragen werden. Damit ist eine effiziente Verteilung der Informationsdaten sichergestellt. Über den wenigstens einen Interaktionskanal kann ein Nutzer über sein Endgerät mit der zentralen Rechnereinheit interagieren. Über den Interaktionskanal können insbesondere solche Verfahrensschritte abgewickelt werden, die unregelmäßig oder selten auftreten. Ebenso ist es denkbar, daß nur ganz spezielle Verfahrensschritte über den Interaktionskanal abgewickelt werden. Beispiele hierfür werden im weiteren Verlauf der Beschreibung näher erläutert. Aus diesem Grund hat das erfindungsgemäße Verfahren weiterhin den Vorteil, daß die notwendige Nutzung des Interaktionskanals minimiert werden kann, was unter anderem zu einer Kostenersparnis für den Nutzer führt, da für die Nutzung des Interaktionskanals im allgemeinen Verbindungsgebühren zu entrichten sind.

Das erfindungsgemäße Verfahren stellt eine Möglichkeit zu einer effizienten Nutzung eines hybriden Übertragungsnetzes dar, wobei ein Teilbereich dieses hybriden Übertragungsnetzes durch den wenigstens einen Vorwärtskanal und der andere Teilbereich des Übertragungsnetzes durch den wenigstens einen Interaktionskanal realisiert wird. Beispiele für die Ausgestaltung der einzelnen Kanäle werden im Zusammenhang mit dem erfindungsgemäßen System näher erläutert.

Die wenigstens eine zentrale Rechnereinheit und das wenigstens eine Endgerät sind über geeignete Schnittstellen mit dem wenigstens einem Vorwärtskanal und dem wenigstens einem Interaktionskanal verbunden. Dabei ist die Erfindung jedoch nicht auf eine bestimmte Anzahl von Endgeräten beschränkt. Ebenso kann die zentrale Rechnereinheit auf unterschiedlichste Art und Weise ausgebildet sein. So ist es beispielsweise denkbar, daß die zentrale Rechnereinheit in Form einer zentralen Servereinrichtung ausgebildet ist. Ebenso kann es sich bei der zentralen Rechnereinheit um ein Netzwerk aus zwei oder mehr einzelnen Rechnereinheiten handeln, die dann in ihrer Gesamtheit die zentrale Rechnereinheit bilden. Vorzugsweise können in der zentralen Rechnereinheit und/oder im Endgerät geeignete Programmmittel vorgesehen sein, die die Verfahrensabläufe unterstützen.

Darüber hinaus ist die Erfindung nicht auf eine bestimmte Anzahl von Vorwärtskanälen und/oder Interaktionskanälen beschränkt.

Erfindungsgemäß ist vorgesehen, daß die zentrale Rechnereinheit zumindest zeitweilig mit einer Datenquelle zusammenwirkt. Dabei kann je nach Ausgestaltungsvariante vorgesehen sein, daß die Datenquelle Bestandteil der zentralen Rechnereinheit ist. Ebenso ist denkbar, daß die zentrale Rechnereinheit und die Datenquelle separat voneinander vorgehalten werden, wobei die zentrale Rechnereinheit in einem solchen Fall zumindest zeitweilig mit der externen Datenquelle zusammenwirkt.

Die Erfindung ist nicht auf bestimmte Arten von Informationsdaten, die übertragen werden sollen, beschränkt. Vorteilhafterweise kann es sich bei den übertragenden Informationsdaten um Printmedieninhalte handeln. In einem solchen Fall kann mittels des erfindungsgemäßen Verfahrens die Erzeugung und Übertragung einer sogenannten elektronischen Zeitung realisiert werden. Nachfolgend wird die Erfindung zur Verdeutlichung des allgemeinen Erfindungsgedankens zwar im Wesentlichen anhand einer elektronischen Zeitung beschrieben. Es ist für einen Fachmann jedoch selbstverständlich, die in diesem Zusammenhang erläuterten Merkmale auch auf andere Arten von Informationsdaten zu übertragen. Grundsätzlich ist die vorliegende Erfindung für solche Informationsdaten einsetzbar, die sich über wenigstens einen Vorwärtskanal übertragen lassen.

Vorzugsweise können die Informationsdaten in Datenblöcke unterschiedlicher Priorität aufgeteilt werden, wobei die Datenblöcke in einem solchen Fall vorteilhaft nach Prioritäten geschachtelt über den Vorwärtskanal übertragen werden. Wenn das Verfahren zum Übertragen von Printmedieninhalten eingesetzt wird, kann dies beispielsweise bedeuten, daß solche Inhalte, die sich gar nicht oder aber nur sehr selten ändern, auch selten übertragen werden. Andere Informationsdatentypen, wie beispielsweise aktuelle Neuigkeiten oder dergleichen, die sich durch eine kurze Verfallsdauer auszeichnen, können beispielsweise eine höhere Priorität haben und daher wesentlich häufiger übertragen werden.

Dabei kann vorgesehen sein, daß die zyklische Übertragung der Datenblöcke dynamisch erfolgt. Im Hinblick auf die Übertragung von Printmedieninhalten kann dies beispielsweise bedeuten, daß zu einem bestimmten Zeitpunkt, beispielsweise frühmorgens, zunächst die Informationsdaten in ihrer Gesamtheit übertragen werden. Diese Informationsdaten liegen anschließend auf dem Endgerät des Nutzers vor. Im weiteren zeitlichen Verlauf kann es dann beispielsweise angebracht sein, daß nur noch Updates dieser Informationsdaten übertragen werden.

Bei der Übertragung der Informationsdatenblöcke über den Vorwärtskanal kann es vorkommen, daß einige Datenblöcke nicht oder nur unvollständig übertragen bzw. vom Endgerät empfangen werden. Nachfolgend werden beispielhaft einige Möglichkeiten beschrieben, wie ein derartiger Datenverlust wirksam verhindert werden kann.

Beispielsweise können die auf das Endgerät übertragenen Informationsdaten in diesem automatisch auf Vollständigkeit überprüft werden. Sofern einzelne Bestandteile der übertragenen Informationsdaten fehlen, können diese vom Endgerät über den Interaktionskanal automatisch angefordert werden. Die fehlenden Informationsdaten können dann beispielsweise nach der Anforderung von der zentralen Rechnereinheit über den Interaktionskanal und/oder den Vorwärtskanal automatisch auf das Endgerät übertragen werden.

Ebenso ist es denkbar, daß beim Fehlen einzelner Bestandteile der übertragenen Informationsdaten diese bei einer nächsten zyklischen Übertragung der entsprechenden Informationsdaten vom Endgerät automatisch in die bereits übertragenen Informationsdaten integriert werden. In einem solchen Fall registriert das Endgerät, daß ein bestimmter Datenblock nicht oder nur unvollständig übertragen worden ist. Wenn der gleiche Datenblock im nächsten Zyklus erneut über den Vowärtskanal übertragen wird, kann das Endgerät die noch fehlenden Informationsdaten in die bereits übertragenen Informationsdaten integrieren oder aber den lückenhaften Datenblock durch den vollständigen Datenblock ersetzen.

Vorteilhaft kein ein Nutzer auf dem ihm zugeordneten Entgerät elektronisch Interaktionsdaten erzeugen, wobei die erzeugten Interaktionsdaten über den Interaktionskanal zu der zentralen Rechnereinheit übertragen werden. Ebenso ist es natürlich auch denkbar, daß in der zentralen Rechnereinheit Interaktionsdaten erzeugt werden, die anschließend über den Interaktionskanal zu dem Endgerät des Nutzers übertragen werden. Bei den Interaktionsdaten handelt es sich grundsätzlich um solche Daten, die einen Inhalt haben, der in Bezug auf die über den Vorwärtskanal übertragenen Informationsdaten steht. Dabei ist die Erfindung jedoch nicht auf bestimmte Typen von Interaktionsdaten beschränkt.

Beispielsweise kann vorgesehen sein, daß der Nutzer auf dem ihm zugeordneten Endgerät elektronisch zu zumindest Teilen der übertragenen Informationsdaten Interaktionsdaten erzeugt und daß die erzeugten Interaktionsdaten über den Interaktionskanal zu der zentralen Rechnereinheit übertragen werden. Wenn es sich bei den übertragenen Informationsdaten beispielsweise um Printmedieninhalte einer elektronischen Zeitung handelt, ist es dem Nutzer auf diese Weise möglich, zu einzelnen Artikeln oder Inhalten der elektronischen Zeitung Leserbriefe, Anmerkungen, Anfragen oder dergleichen in Form von Interaktionsdaten zu erzeugen und diese anschließend zur weiteren Verarbeitung an die zentrale Rechnereinheit zu übertragen. Ebenso kann der Nutzer auf diese Weise generelle Anfragen an den Erzeuger/Versender der Informationsdaten richten, an von dem Erzeuger/Versender initiierten Umfragen oder Befragungen teilnehmen und dergleichen.

Von der zentralen Rechnereinheit an das Endgerät eines Nutzers übertragene Interaktionsdaten können bei Einsatz des Verfahrens im Zusammenhang mit einer elektronischen Zeitung beispielsweise in Form von zeitbasierten Informationen genutzt werden. So ist es denkbar, daß Informationen in Form von Veranstaltungshinweisen übertragen werden können, die dann automatisch in einen auf dem Endgerät des Nutzers befindlichen elektronischen Kalender eingetragen werden. Der Kalender kann vorteilhaft mit einer Erinnerungsfunktion ausgestattet sein, die den Nutzer in einem festgelegten Zeitabstand vor einem Ereignis an dieses erinnert.

Ebenso ist es denkbar, daß im Endgerät elektronisch automatisch Interaktionsdaten erzeugt werden und daß die erzeugten Interaktionsdaten über den Interaktionskanal zu der zentralen Rechnereinheit übertragen werden. So ist es beispielsweise denkbar, daß von der zentralen Rechnereinheit automatisch Anfragen erzeugt und an die einzelnen Engeräte übertragen werden, die Aufschluß über das Nutzerverhalten oder dergleichen geben sollen. Diese Anfragen, bei denen es sich dann ebenfalls um Interaktionsdaten handelt, werden automatisch an die Endgeräte übertragen. Dort können auf der Basis der Anfrage automatisch Interaktionsdaten erzeugt werden, die anschließend über den Interaktionskanal an die zentrale Rechnereinheit übertragen werden. Dort werden die Interaktionsdaten anschließend weiterverarbeitet.

Beispielsweise kann vorgesehen sein, daß die Interaktionsdaten in der zentralen Rechnereinheit in die zu übertragenden Informationsdaten integriert und gemeinsam mit diesen über den Vorwärtskanal übertragen werden. Wenn es sich bei den zu übertragenden Informationsdaten um eine elektronische Zeitung handelt, können auf diese Weise beispielsweise Interaktionsdaten in Form von Leserbriefen in die jeweils entsprechenden Datenblöcke der zu übertragenden Informationsdaten integriert werden. Wenn dann ein entsprechender Datenblock im Rahmen eines späteren Zyklus erneut über den Vorwärtskanal übertragen wird, können diese integrierten Daten mit übertragen und anderen Nutzern zur Verfügung gestellt werden.

In weiterer Ausgestaltung kann die Position des wenigstens einen Endgeräts über ein Standortermittlungsverfahren bestimmt werden, wobei die ermittelten Positionsdaten zur zentralen Rechnereinheit übertragen werden. Von der zentralen Rechnereinheit können dann zusätzlich zu den Informationsdaten der Position des Endgeräts zugeordnete Lokal-Informationsdaten übertragen werden. Auf diese Weise wird es möglich, auch lokal begrenzte Informationsdaten auf ein Endgerät zu übertragen. Wenn es sich bei den zu übertragenden Informationsdaten um Inhalte einer elektronischen Zeitung handelt, kann es beispielsweise gewünscht sein, lokal begrenzte Informationen zur Verfügung zu stellen. Dies kann sich beispielsweise im Fall von Lokal-Nachrichten von Werbung und dergleichen ergeben. So ist es beispielsweise denkbar, daß eine Handelskette, die über verschiedene, geographisch verteilte Verkaufsstätten verfügt, in der elektronischen Zeitung zunächst eine generelle Werbeanzeige für ihre Produkte integriert. Wenn sich nun ein Nutzer mit seinem Endgerät in der Nähe einer bestimmten Verkaufsstätte befindet, kann die Position des Endgeräts ermittelt und an die zentrale Rechnereinheit übertragen werden. Dort sind beispielsweise die Standortdaten der einzelnen Verkaufsstätten hinterlegt. Tritt nun eine Übereinstimmung oder zumindest eine Ähnlichkeit zwischen der ermittelten Position des Endgeräts und dem Standort der Verkaufsstätte auf, werden von der zentralen Rechnereinheit entsprechende Lokal-Informationsdaten, bei denen es sich beispielsweise um die genaue Anschrift der Verkaufsstätte, um die jeweiligen Preise der Produkte oder dergleichen handeln kann, auf das Endgerät übertragen.

Dabei können die Lokal-Informationsdaten von der zentralen Rechnereinheit über den Vorwärtskanal und/oder den Interaktionskanal auf das Endgerät übertragen werden. Wenn die Lokal-Informationsdaten über den Vorwärtskanal übertragen werden, können beispielsweise auch zwei oder mehr Vorwärtskanäle vorgesehen sein. So ist es beispielsweise denkbar, daß die eigentlichen Informationsdaten über einen bestimmten Vorwärtskanal übertragen werden, während die Lokal-Informationsdaten über einen anderen, möglicherweise lokalen Vorwärtskanal übertragen werden.

In anderer Ausgestaltung kann vorgesehen sein, daß die von der zentralen Rechnereinheit den Positionsdaten zugeordneten Lokal-Informationsdaten in die zu übertragenden Informationsdaten integriert werden und daß diese Informationsdaten anschließend auf das Endgerät übertragen werden.

Grundsätzlich ist die Erfindung nicht auf bestimmte Standort-Ermittlungsverfahren beschränkt. Die Auswahl der jeweils geeigneten Standort-Ermittlungsverfahren ergibt sich je nach Ausgestaltung des eingesetzten hybriden Übertragungsnetzes, bzw. der darin ausgebildeten Teil-Übertragungsnetze. So ist es beispielsweise möglich, die Positionsdaten der Endgeräte mittels eines satellitengestützten basierten Standort-Ermittlungsverfahrens (etwa GPS) zu ermitteln. Wenn es sich bei einem der Teilnetze des hybriden Übertragungsnetzes um ein Mobilfunknetz handelt, können die Positionsdaten beispielsweise auch mittels eines GSM-basierten Standort-Ermittlungsverfahrens ermittelt werden.

Zur Ortung mobiler Endgeräte über bestimmte Standort-Ermittlungsverfahren sind bereits verschiedene Lösungen bekannt geworden. So ist in der DE 198 03 960 ein Verfahren und System zur Nutzung von modernen Ortungssystemen in Mobilfunksystemen beschrieben.

Die Ortung eines Mobiltelefons kann beispielsweise auch nach dem sogenannten EOTD-Verfahren (enhanced observed time difference) erfolgen. Dabei werden Laufzeitunterschiede von Signalen eines Mobiltelefons zu mehreren Sendern gemessen. Aus den ermittelten Werten kann dann unter Verwendung geeigneter Algorithmen automatisch der Standort des Mobiltelefons ermittelt werden. Ein solches Verfahren ist im Rahmen der vorliegenden Erfindung beispielsweise dann vorteilhaft einsetzbar, wenn ein Teil des Übertragungsnetzes als Mobilfunknetz ausgebildet ist, und wenn die Endgeräte entsprechende Mobilfunkkomponenten enthalten, oder aber wenn die Endgeräte mit entsprechenden Mobiltelefonen zusammenwirken. Nicht ausschließliche Beispiele hierzu werden im Zusammenhang mit dem erfindungsgemäßen System näher beschrieben.

Bei den übertragenen Informationsdaten kann es sich beispielsweise um Textdaten und/oder Audiodaten und/oder Videodaten und/oder Bilddaten handeln.

Vorzugsweise können von der zentralen Rechnereinheit zumindest zu Bestandteilen der über den Vorwärtskanal übertragenen Informationsdaten weitergehende Detail-Informationsdaten, insbesondere in Form von Textdaten und/oder Audiodaten und/oder Videodaten und/oder Bilddaten auf das wenigstens eine Endgerät übertragen werden. Eine solche Übertragung von zusätzlichen Detail-Informationsdaten kann insbesondere dann erfolgen, wenn diese Daten zuvor mittels Interaktionsdaten, die über den Interaktionskanal auf die zentrale Rechnereinheit übertragen worden sind, angefordert werden.

Vorteilhaft können die Detail-Informationsdaten von der zentralen Rechnereinheit über den Vorwärtskanal und/oder den Interaktionskanal auf das Endgerät übertragen werden.

Wie bereits dargelegt wurde, ist erfindungsgemäß vorgesehen, dass die über den Vorwärtskanal übertragenen Informationsdaten zumindest teilweise verschlüsselt übertragen werden. Dabei ist die Erfindung nicht auf bestimmte Verschlüsselungs- und Entschlüsselungsarten beschränkt. Beispielsweise kann vorgesehen sein, daß alle über den Vorwärtskanal übertragenen Informationsdaten zunächst verschlüsselt auf das Endgerät übertragen werden. Die Entschlüsselung der Informationsdaten erfolgt anschließend im Endgerät. Dabei besteht die Möglichkeit, daß im Endgerät nur Teile der übertragenen Informationsdaten entschlüsselbar sein können. Wenn es sich bei den übertragenen Informationsdaten beispielsweise um Printmedieninhalte einer elektronischen Zeitung handelt, kann auf diese Weise erreicht werden, daß ein Nutzer nur bestimmte Inhalte des Informationsdatenangebots entschlüsseln und folglich auch verwerten kann. Auf diese Weise ist es dem Betreiber des Systems beispielsweise möglich, verschiedene Informationsangebote zur Verfügung zu stellen. Über die dem Nutzer zur Verfügung stehenden Entschlüsselungsmittel kann dann der Umfang festgelegt werden, in welchem dem Nutzer die verschlüsselt übertragenen Informationsdaten zugänglich gemacht werden. Dies macht einen variablen Abonnementsservice, beispielsweise nach bestimmten Themenrubriken oder dergleichen, möglich.

Die Entschlüsselung der über den Vorwärtskanal übertragenen, verschlüsselten Informationsdaten kann auf unterschiedliche Weise erfolgen. Nachfolgend werden hierzu zwei nicht ausschließliche Beispiele beschrieben.

So ist es beispielsweise denkbar, daß in dem wenigstens einen Endgerät zumindest zeitweilig wenigstens ein Schlüssel zum Entschlüsseln zumindest eines Bestandteils der über den Vorwärtskanal übertragenen, verschlüsselten Informationsdaten abgelegt ist, wobei die Informationsdaten in dem Endgerät über ein Entschlüsselungsverfahren entschlüsselt werden. Dabei kann der wenigstens eine Schlüssel von der zentralen Rechnereinheit über den Interaktionskanal auf das wenigstens eine Endgerät übertragen werden.

Erfindungsgemäß ist vorgesehen, daß von der zentralen Rechnereinheit Entschlüsselungsinformationen über den Interaktionskanal auf das Endgerät übertragen werden und daß mittels der Entschlüsselungsinformationen zumindest ein Bestandteil der über den Vorwärtskanal übertragenen, verschlüsselten Informationsdaten in dem Endgerät entschlüsselt wird. Auf diese Weise wird auf besonders einfache Weise eine Möglichkeit geschaffen, Informationsdaten in einem zuvor festgelegten Umfang einem Nutzer zur Verfügung zu stellen. Über die übertragenen Entschlüsselungsinformationen können die auf das Endgerät übertragenen, verschlüsselten Informationsdaten dynamisch je nach Bezugsmodell entschlüsselt werden. Dieses Vorgehen hat den Vorteil, daß in dem Endgerät keine lokalen Funktionen zur Entschlüsselung, wie beispielsweise Smart-Cards oder dergleichen implementiert sein müssen, die eine Entschlüsselung der verschlüsselten Informationsdaten ermöglichen. Weiterhin besteht für den Betreiber des Systems die Möglichkeit, die Entschlüsselungsinformationen sehr leicht abändern zu können, so daß dem Nutzer des Systems auf einfache Weise unterschiedlichste Informationsdaten zur Verfügung gestellt werden können.

Wenn das Verfahren im Zusammenhang mit der Übertragung von Printmedieninhalten in Form einer elektronischen Zeitung eingesetzt wird, ist es dem Betreiber des Systems, ebenso wie dem Nutzer des Systems auf einfache Weise möglich, ein auf bestimmte Inhalte begrenztes Informationsabonnement jederzeit zu ändern, beispielsweise zu ergänzen oder dergleichen. So ist es beispielsweise möglich, daß ein Nutzer je nach Bezugsmodell täglich verschiedene Entschlüsselungsinformationen erhält, beispielsweise für ein Jahresabonnement, ein Monatsabonnement, für einen Einzelkauf oder dergleichen. In einem solchen Fall können die Informationsdaten von der zentralen Rechnereinheit komplett - jedoch in verschlüsselter Form - über den Vorwärtskanal übertragen und vom Endgerät empfangen werden. Jedoch können im Endgerät nur durch die Entschlüsselungsinformationen berechtigte Informationsdaten entschlüsselt und gespeichert werden.

Vorteilhaft können zwischen der zentralen Rechnereinheit und dem wenigstens einen Endgerät über den Interaktionskanal Informationen zum Zwecke der Authentifizierung des Nutzers übertragen werden. Derartige Authentifizierungsdaten können beispielsweise Informationen in Form eines bestimmten Absenderprofils, einer Nutzerberechtigung, einer Nutzerkennung und dergleichen enthalten. Wenn der Nutzer beispielsweise sein Endgerät einschaltet, können die Authentifizierungsdaten vom Endgerät über den Interaktionskanal zunächst an die zentrale Rechnereinheit übertragen werden. Dort werden die Authentifizierungsdaten auf ihre Gültigkeit geprüft, beispielsweise in dem sie mit entsprechenden Referenzdaten verglichen werden. Sobald das Endgerät ordnungsgemäß bei der zentralen Rechnereinheit angemeldet ist, können beispielsweise erforderliche Entschlüsselungsinformationen von der zentralen Rechnereinheit über den Interaktionskanal auf das Endgerät übertragen werden, so daß im Endgerät eine Entschlüsselung der über den Vorwärtskanal verschlüsselt übertragenen Informationsdaten möglich wird.

Vorzugsweise können zwischen der zentralen Rechnereinheit und dem wenigstens einen Endgerät über den Interaktionskanal Informationen zum Zwecke der Kostenabrechnung übertragen werden. Auf diese Weise wird es in besonders einfacher Weise möglich, ein Abrechnungssystem für den Bezug von Informationsdaten zu realisieren. Dies soll anhand eines nicht ausschließlichen Beispiels erläutert werden. Beispielsweise ist es denkbar, daß ein Nutzer eine bestimmte Grundmenge an Informationsdaten bezieht, für die er einen bestimmten Pauschalbetrag entrichtet. Im Zusammenhang mit einer elektronischen Zeitung ist es beispielsweise denkbar, daß ein Nutzer für einen Grundbetrag bestimmte Informationsinhalte zur Verfügung gestellt bekommt. Dies kann beispielsweise unter Zuhilfenahme der wie vorstehend beschriebenen Verschlüsselungs- und Entschlüsselungsverfahren geschehen. Wenn nun der Nutzer weitere Zusatzangebote in Anspruch nehmen möchte, kann er über sein Endgerät entsprechende Interaktionsdaten erstellen und über den Interaktionskanal an die zentrale Rechnereinheit übertragen. In der zentralen Rechnereinheit können für die Nutzung der gewünschten Zusatzangebote geeignete Entschlüsselungsinformationen erstellt und anschließend über den Interaktionskanal zurück an das Endgerät des Nutzers übertragen werden. Der Nutzer hat nun die Möglichkeit, über sein Endgerät diese zusätzlichen Informationen, ebenfalls zu entschlüsseln. Gleichzeitig ist für den Betreiber des Systems eine einfach Möglichkeit gegeben, die Bereitstellung dieser zusätzlichen Informationen abzurechnen.

So ist es denkbar, daß in der zentralen Rechnereinheit Datensätze abgelegt sind, in der Preise für die zur Verfügung stehenden Informationsdaten-Inhalte abgelegt sind. Wenn nun ein bestimmter Informationsdaten-Inhalt von einem Nutzer angefordert wird, kann in der zentralen Rechnereinheit automatisch der dafür zu entrichtende Geldbetrag generiert werden. Dieser Betrag kann dem Nutzer anschließend in Rechnung gestellt werden. Wenn das hybride Übertragungsnetz beispielsweise ein Mobilfunk-Teilnetz aufweist, kann die Abrechnung etwa über die Telefonabrechnung erfolgen.

Gemäß einer anderen Ausführungsform ist es auch denkbar, daß ein Nutzer keinen Pauschalbetrag für eine Grundversorgung mit Informationsdaten entrichtet, sondern daß er nur für solche Informationen bezahlt, die er auch tatsächlich erhalten möchte. Auch dies soll anhand eines nicht ausschließlichen Beispiels erläutert werden. Der Betreiber des Systems kann beispielsweise sein gesamtes Angebot an Informationsdaten in der wie oben beschriebenen Weise verschlüsselt über den Vorwärtskanal zur Verfügung stellen. Ein Nutzer des Systems kann sich beispielsweise mittels seines Endgeräts über den Interaktionskanal mit der zentralen Rechnereinheit in Verbindung setzen, wo etwa eine Inhaltsübersicht aller vom Betreiber des Systems zur Verfügung gestellten Informationsdaten ersichtlich ist. Ebenso ist es denkbar, daß eine Inhaltsübersicht in unverschlüsselter Form über den Vorwärtskanal übertragen wird. Aus der Inhaltsübersicht kann der Nutzer nunmehr die ihn interessierenden Informationsdaten-Inhalte auswählen. Anschließend werden von der zentralen Rechnereinheit entsprechende Entschlüsselungsinformationen erzeugt und über den Interaktionskanal auf das Endgerät des Nutzers übertragen. Dieser kann nunmehr die von ihm gewünschten Informationsdaten entschlüsseln und weiterverwerten. Gleichzeitig ist es für den Betreiber des Systems auf einfach Weise möglich, die vom Nutzer angeforderten Informationsdaten abzurechnen.

Erfindungsgemäß werden zumindest Bestandteile der Informationsdaten nach der Übertragung auf ein Endgerät von diesem Endgerät mittels eines Übertragungsverfahrens auf wenigstens ein anderes Endgerät übertragen. Auf diese Weise können Inhalte von einem Endgerät bequem und problemlos auf ein anderes Endgerät übertragen werden. Dabei können die Informationen beispielsweise mittels E-mail, per Fax oder dergleichen weiterverschickt werden. Auch ist es möglich, daß die auf einem Endgerät abgelegten Informationsdaten mit einem entsprechenden Link versehen werden und daß nur dieser Link auf ein anderes Endgerät übertragen wird. Der Nutzer des anderen Endgeräts kann anschließenden den übermittelten Link aktivieren und so an die gewünschten Informationsdaten gelangen.

Erfindungsgemäß werden in der zentralen Rechnereinheit zunächst bestimmte Informationsdateninhalte festgelegt, die von einem Nutzer auf einen anderen Nutzer übertragen werden dürfen. Die dazu erforderlichen Informationen können beispielsweise, - zusammen mit den entsprechenden Entschlüsselungsinformationen - von der zentralen Rechnereinheit auf das Endgerät übertragen werden, so daß nur entsprechend markierte Informationsdaten auch tatsächlich weitergeleitet werden können.

In weiterer Ausgestaltung können über den Vorwärtskanal übertragene Informationsdaten und/oder über den Interaktionskanal übertragene Interaktionsdaten zumindest zeitweilig und zumindest teilweise in wenigstens einer Speichereinrichtung abgespeichert werden, wobei die Speichereinrichtung zumindest zeitweilig mit dem wenigstens einem Endgerät zusammenwirkt. Dabei ist die Erfindung nicht auf bestimmte Arten von Speichereinrichtungen beschränkt. Beispielsweise kann es sich bei der Speichereinrichtung im Vergleich zum Endgerät um ein externes Speichermittel handeln. In diesem Fall kann die Speichereinrichtung beispielsweise als (Magnet-)Band als Diskette, als CD-Rom, als dezentrale Datenbank oder dergleichen ausgebildet sein. Ebenso ist es denkbar, daß die Speichereinrichtung Bestandteil des Endgeräts ist. In diesem Fall kann es sich bei der Speichereinrichtung beispielsweise um eine Festplatte oder dergleichen handeln.

Durch Verwendung einer Speichereinrichtung können einmal übertragene Informations- und/oder Interaktionsdaten jeder Zeit wieder verwendet werden. Beispielsweise können die Daten in der Endeinrichtung gespeichert und - bei Genehmigung wie weiter oben beschrieben - auf andere Datenträger übertragen werden. Auch können die gespeicherten Daten zu einem späteren Zeitpunkt ausgedruckt werden, etwa wenn die Endeinrichtung an eine geeignete Druckereinrichtung angeschlossen wird. Durch die Verwendung einer Speichereinrichtung wird es ebenfalls möglich, die empfangenen Daten zu archivieren, zu selektieren und dergleichen.

Vorteilhaft können vom Nutzer eines Endgeräts elektronisch Profildaten erzeugt werden, wobei die Profildaten in der zentralen Rechnereinheit zumindest zeitweilig abgespeichert werden und wobei dem Nutzer auf der Basis dieser Profildaten individualisierte Informationsdaten über den Vorwärtskanal auf dessen Endgerät übertragen werden. Über die Erstellung und Hinerlegung der Profildaten ist es dem Nutzer beispielsweise möglich, daß ihm nur auf ihn zugeschnittene, personalisierte Informationsdaten zur Verfügung gestellt werden. Beispielsweise ist es denkbar, daß die Profildaten Informationen über die Interessen des Nutzers, sein Alter, sein Geschlecht, seine bevorzugten Aufenthaltsorte und dergleichen enthalten. Auf diese Weise ist es etwa möglich, daß dem Nutzer bestimmte Lokal-Informationsdaten, oder aber auf sein persönliches Profil zugeschnittene Informationsdaten, wie beispielsweise geschlechtsspezifische Informationsdaten, personalisierte Angebote und dergleichen zur Verfügung gestellt werden können. Auch könnten auf diese Weise auf den jeweiligen Nutzer zugeschnittene Werbeinformationen übertragen werden.

Vorzugsweise ist vorgesehen, daß die Profildaten vom Nutzer auf elektronischem Weg erzeugt und zur zentralen Rechnereinheit übertragen werden. Dabei kann natürlich auch vorgesehen sein, daß die Profildaten, nachdem sie vom Nutzer einmal erstellt worden sind, jederzeit auch wieder geändert werden können. Die Erstellung und Übertragung der Profildaten kann auf unterschiedliche Weise erfolgen, wobei dazu nachfolgend zwei nicht ausschließliche Beispiele beschrieben werden.

Beispielsweise ist es denkbar, daß die Profildaten im Endgerät des Nutzers erzeugt und zur zentralen Rechnereinheit übertragen werden. Alternativ oder zusätzlich zu dieser Variante ist es auch denkbar, daß die Profildaten in einer vom Endgerät unabhängigen Eingabevorrichtung erzeugt und zur zentralen Rechnereinheit übertragen werden. Bei einer derartigen Eingabevorrichtung kann es sich beispielsweise um einen Computer oder dergleichen handeln. So ist es denkbar, daß ein Nutzer des Systems an seinem Computer die Profildaten zunächst erstellt und diese anschließend zur zentralen Rechnereinheit überträgt. Dies kann beispielsweise unter Zuhilfenahme des Internet erfolgen. So ist es denkbar, daß der Betreiber des Systems eine entsprechende Internetseite bereitstellt, auf die der Nutzer des Systems über seine Eingabevorrichtung Zugriff nehmen kann. Wenn der Nutzer - beispielsweise nach Eingabe einer bestimmten Nutzerkennung sowie eines bestimmten Passworts - Zugang zu der für die Konfiguration der Profildaten vorgesehen Webseite erhalten hat, kann der Nutzer die Profildaten über seine Eingabevorrichtung bequem auf der Webseite anlegen bzw. verändern. Auf diese erzeugten Profildaten kann dann die zentrale Rechnereinheit Zugriff nehmen. Für den Nutzer des Systems wird damit eine besonders einfache und komfortable Möglichkeit geschaffen, die Profildaten auf elektronischem Weg zu erzeugen bzw. zu ändern. Natürlich ist es auch möglich, daß der Nutzer über sein Endgerät Zugriff auf die Internetseite des Betreibers nehmen und dort die Profildaten bearbeiten kann.

Neben den zuvor beschriebenen Beispielen unterschiedlicher Typen von Profildaten ist es beispielsweise auch möglich, durch Erzeugung entsprechender Profildaten auch Vorgaben bezüglich der Art und Weise, wie die Informationsdaten übertragen werden sollen, zu machen. Vorteilhaft kann vorgesehen sein, daß vom Nutzer eines Endgeräts elektronisch Profildaten in Form von Layout-Vorgaben für die zu übertragenden Informationsdaten und/oder in Form von Vorgaben zum Übertragungsstil der zu übertragenden Informationsdaten erzeugt werden.

Auf diese Weise wird es dem Nutzer ermöglicht, die Erscheinungsform der übertragenen Informationsdaten nach seinem eigenen Belieben zu bestimmen. Ebenso könnte der Nutzer durch Erzeugung entsprechender Profildaten auch festlegen, ob und wann Aktualisierungen der übertragenen Informationsdaten gewünscht sind und ob dies etwa manuell oder automatisch erfolgen soll. Auch könnte der Nutzer Profildaten bezüglich eines bestimmten Werbeprofils erzeugen, so daß ihm nur solche Werbeinformationen übertragen werden, die dem festgelegten Profil entsprechen.

Die Profildaten können natürlich auch noch ganz andere Datentypen beinhalten, die etwa auch auf das Endgerät an sich oder auf dessen Peripherie bezogen sind. So wäre es über die Erstellung geeigneter Profildaten beispielsweise auch möglich, geeignete Speichermöglichkeiten, Druckmöglichkeiten und dergleichen im Endgerät festzulegen.

Gemäß einem weiteren Aspekt wird ein System zum elektronischen Übertragen von Informationsdaten, insbesondere von Informationsdaten in Form von Printmedieninhalten, bereitgestellt, aufweisend ein hybrides Übertragungsnetz mit wenigstens einem Vorwärtskanal, wenigstens einem Interaktionskanal, wenigstens einer zentralen Rechnereinheit, die zumindest zeitweilig mit wenigstens einer Datenquelle zusammenwirkt, und wenigstens ein einem Nutzer des Systems zugeordnetes Endgerät, wobei die Informationsdaten über den wenigstens einen Vorwärtskanal von der zentralen Rechnereinheit an das wenigstens eine Endgerät übertragen werden und wobei das wenigstens eine Endgerät über den wenigstens einen Interaktionskanal zumindest zeitweilig mit der zentralen Rechnereinheit interagiert. Das System ist erfindungsgemäß **dadurch gekennzeichnet, daß** Mittel zur Aufteilung der Informationsdaten in zwei oder mehr Datenblöcke vorgesehen sind und das Mittel zur zyklischen Übertragung der Datenblöcke über den Vorwärtskanal vorgesehen sind.

Gemäß noch einem weiteren Aspekt der Erfindung wird ein System zum elektronischen Übertragen von Informationsdaten, insbesondere von Informationsdaten in Form von Printmedieninhalten, bereitgestellt, aufweisend ein hybrides Übertragungsnetz, mit wenigstens einem Vorwärtskanal, wenigstens einem Interaktionskanal, wenigstens einer zentralen Rechnereinheit, die zumindest zeitweilig mit wenigstens einer Datenquelle zusammenwirkt, und wenigstens ein einem Nutzer des Systems zugeordnetes Endgerät, wobei die Informationsdaten über den wenigstens einen Vorwärtskanal von der zentralen Rechnereinheit an das wenigstens eine Endgerät übertragen werden, wobei das wenigstens eine Endgerät über den wenigstens einen Interaktionskanal zumindest zeitweilig mit der zentralen Rechnereinheit interagiert, wobei Mittel zur zumindest teilweisen Verschlüsselung der zu übertragenden Informationsdaten vorgesehen sind und wobei in dem wenigstens einen Endgerät Mittel zur zumindest teilweisen Entschlüsselung der übertragenen, verschlüsselten Informationsdaten vorgesehen sind. Das System ist dadurch gekennzeichnet, dass die Informationsdaten in zwei oder mehr Datenblöcke aufgeteilt werden und dass die Datenblöcke zyklisch über den Vorwärtskanal übertragen werden, dass der Interaktionskanal ausgebildet ist, um von der zentralen Rechnereinheit Entschlüsselungsinformationen, über die der Umfang festgelegt wird, in welchem dem Nutzer die über den Vorwärtskanal übertragenen Informationsdaten zugänglich gemacht werden, auf das Endgerät zu übertragen, so dass mittels der Entschlüsselungsinformationen zumindest ein Bestandteil der über den Vorwärtskanal übertragenen, verschlüsselten Informationsdaten dynamisch je nach Bezugsmodell in dem Endgerät entschlüsselt wird, dass die zentrale Rechnereinheit ausgebildet ist, um zunächst bestimmte Informationsdateninhalte festzulegen, die von einem Nutzer auf einen anderen Nutzer übertragen werden dürfen, dass die zentrale Rechnereinheit ausgebildet ist, um die dazu erforderlichen Informationen zusammen mit den entsprechenden Entschlüsselungsinformationen von der zentralen Rechnereinheit auf das Endgerät zu übertragen, so dass nur entsprechend markierte Informationsdaten nach der Übertragung auf ein Endgerät von diesem Endgerät mittels eines Übertragungsverfahrens auf wenigstens ein anderes Endgerät übertragen werden.

Zu den Vorteilen sowie der Funktionsweise des erfindungsgemäßen Systems wird ebenfalls auf die Ausführungen im Zusammenhang mit den erfindungsgemäßen Verfahrensaspekten Bezug genommen und hiermit verwiesen. Bei den erfindungsgemäß vorgesehenen Mitteln kann es sich beispielsweise um mechanische und/oder elektronische Bauteile und Komponenten, um Schaltungen, um Schaltungsteile, um geeignete Programmmittel, bzw. Software, und dergleichen handeln. Bei den Mitteln kann es sich insbesondere um solche Bauteile und Komponenten handeln, die im Zusammenhang mit den erfindungsgemäßen Verfahrensaspekten bereits beschrieben worden sind, so daß diesbezüglich auf die vorstehenden Ausführungen voll inhaltlich Bezug genommen und hiermit verwiesen wird.

Vorteilhaft kann der wenigstens eine Vorwärtskanal als Broadcast-Kanal, insbesondere als Kanal für terrestrischen Broadcast, ausgebildet sein. Dabei ist die Erfindung nicht auf bestimmte Ausführungsformen für den Vorwärtskanal beschränkt. Vorteilhaft handelt es sich bei dem Vorwärtskanal um einen solchen Kanal, mit dem eine breitbandige Übertragung von Inhalten möglich ist. Auf diese Weise wird eine kosteneffiziente Verteilung von Informationsdaten über sehr große räumliche Bereiche möglich. Vorteilhaft kann es sich bei dem Vorwärtskanal um einen Broadcast-Kanal für digitalen Rundfunk handeln. Der digitale Rundfunkkanal bzw. das darin implementierte digitale Rundfunknetz übernimmt dabei die effiziente Datenverteilung. Beispiele für vorteilhafte Typen von Vorwärtskanälen sind etwa DVB-T/DAB-Kanäle, Kanäle für terrestrischen Rundfunk, Kanäle für terrestrisches Digitalfernsehen und dergleichen.

Vorzugsweise kann der wenigstens eine Vorwärtskanal als unidirektionaler Kanal ausgebildet sein. Natürlich ist es auch denkbar, daß der Vorwärtskanal als bidirektionaler Kanal ausgebildet ist.

In weiterer Ausgestaltung kann der wenigstens eine Interaktionskanal als bidirektionaler Kanal ausgebildet sein. Vorzugsweise kann der wenigstens eine Interaktionskanal als Telekommunikationskanal, insbesondere als Mobilfunkkanal, ausgebildet sein. Bei dem Interaktionskanal, bzw. den in diesem implementierten Netz kann es sich beispielsweise um ein GSM- /GPRS- /UMTS-Netz und dergleichen handeln. Über einen derart ausgestalteten Interaktionskanal ist es auf besonders einfache Weise möglich, die wie weiter oben bereits beschriebene Interaktivität, Authentifizierung, Abrechenbarkeit und dergleichen sicherzustellen. Dabei ist es durch die genannten Interaktionskanal-Typen auf besonders kostengünstige Weise möglich, einen (personalisierten) Austausch von Interaktionsdaten vorzunehmen. Der Interaktionskanal kann jedoch auch als unidirektionaler Kanal ausgebildet sein.

Besonders vorteilhaft ist es, wenn das hybride Übertragungsnetz aus einem Vorwärtskanal für digitalen Rundfunk und wenigstens einem Interaktionskanal gebildet ist, der auf einem Telekommunikationsnetz - insbesondere auf einem Mobilfunknetz - basiert. Auf diese Weise verfügt das hybride Übertragungsnetz über allgegenwärtige Teilnetze, so daß das erfindungsgemäße System bzw. das erfindungsgemäße Verfahren ohne räumliche Beschränkungen einsetzbar bzw. anwendbar ist.

Natürlich ist es auch möglich, ein hybrides Übertragungsnetz unter Verwendung von zumindest teilweise stationären Komponenten zu verwenden. Hierbei kann es sich beispielsweise um hybride Netze ohne Rundfunkanteil handeln, bei denen etwa zwei bidirektionale Systeme zusammenarbeiten, beispielsweise Mobilfunk und Wireless LAN oder Mobilfunk und Festnetz und dergleichen.

Vorzugsweise kann das wenigstens eine Endgerät als mobiles Endgerät ausgebildet sein. Dabei ist die Erfindung nicht auf bestimmte Ausführungsformen der mobilen Endgeräte beschränkt. So ist es beispielsweise denkbar, daß die mobilen Endgeräte als mobile Computer, beispielsweise Laptops, Notebooks oder dergleichen, als PDA (Personal Digital Assistent) und dergleichen ausgebildet sind. Bei dem Endgerät kann es sich jedoch auch um eine Art Drucker handeln, auf dem die übertragenen Informationsdaten ausgedruckt werden können. Auch ist es beispielsweise denkbar, daß das Endgerät in einem Fahrzeug installiert ist, so daß auch dort die gewünschten Informationsdaten empfangen werden können.

Wenn mit dem System Informationsdaten in Form von Printmedieninhalten einer elektronischen Zeitung übertragen werden sollen, ist das Endgerät vorteilhaft jedoch in einer Weise ausgestaltet, daß es der Gestalt und Handhabbarkeit einer bisher bekannten, auf Papierbasis bestehenden Zeitung möglichst nahe kommt. Aus diesem Grund kann vorteilhaft vorgesehen sein, daß das wenigstens eine Endgerät zumindest teilweise eine flexible Gestalt aufweist. Auf diese Weise ist es möglich, daß das Endgerät - ähnlich wie eine Zeitung - gefaltet und einfach gehandhabt werden kann.

Vorteilhaft kann das wenigstens eine Endgerät wenigstens eine Anzeigeeinrichtung für Daten aufweisen, wobei die Anzeigeeinrichtung insbesondere als Touchscreen ausgebildet ist. Selbstverständlich handelt es sich hierbei um eine rein beispielhafte Ausgestaltungsvariante für die Anzeigeeinrichtung, so daß auch andere Ausführungsformen denkbar sind. Vorteilhaft ist es, daß dem Nutzer die Informationsdaten in dem Endgerät attraktiv präsentiert werden können. Dies kann beispielsweise durch ein ausreichend großes Farbdisplay realisiert werden.

Ein weiteres vorteilhaftes Merkmal für das Endgerät kann eine Sprachausgabe bzw. "Text-to-speech"-Funktionalität darstellen, die etwa von Autofahrern genutzt werden könnte, die morgens auf dem Weg zur Arbeit ihre Zeitung vorgelesen bekommen und dergleichen.

In weiterer Ausgestaltung kann das wenigstens eine Endgerät wenigstens eine Speichereinrichtung zum Speichern von Daten aufweisen, wobei die wenigstens eine Speichereinrichtung insbesondere lösbar mit dem wenigstens einen Endgerät verbunden ist.

Vorzugsweise kann das wenigstens eine Endgerät Mittel zum Übertragen von Informationsdaten auf ein anderes Endgerät aufweisen. Hierbei kann es sich beispielsweise um eine geeignete Kommunikationsschnittstelle, um entsprechende Programmmittel und dergleichen handeln.

In weiterer Ausgestaltung kann das wenigstens eine Endgerät eine Eingabevorrichtung zum elektronischen Erzeugen von Daten aufweisen. Mittels einer solchen Eingabevorrichtung können beispielsweise die weiter oben bereits im Detail erläuterten Interaktionsdaten erzeugt werden.

Weiterhin kann vorgesehen sein, daß das wenigstens eine Endgerät Mittel zur Auswahl und/oder Aktivierung bestimmter Funktionalitäten aufweist. Hierbei kann es sich beispielsweise um Selektions-Bedienelemente, wie beispielsweise Selektionsknöpfe, Selektionsräder und dergleichen handeln.

Die Auswahl- bzw. Aktivierungsmittel können beispielsweise zur Auswahl und/oder Aktivierung bestimmter Funktionalitäten dienen. So ist es beispielsweise denkbar, daß über die Mittel eine Suchfunktion aktiviert und betrieben werden kann, mittels derer bestimmte Schlüsselworte gesucht werden können. Weiterhin ist es denkbar, daß eine Zoom-Funktion betätigt werden kann, mittels derer bestimmte Inhalte wie Artikel, Bilder und dergleichen vergrößert bzw. verkleinert werden können. Weiterhin kann über die genannten Mittel beispielsweise eine Kopier- /Sicherungsfunktion betätigt werden, mittels derer bestimmte Inhalte der übertragenen Informationen markiert und gespeichert werden können. Darüber hinaus können die Mittel auch geeignet sein, die sogenannte "Text-to-speech"-Funktionalität zu aktualisieren, mittels derer die Informationsdateninhalte dem Nutzer automatisch vorgelesen werden. Schließlich können die Mittel auch dazu ausgebildet sein, bestimmte Informationsdaten-Bestandteile auszuwählen und anschließend auf ein anderes Endgerät zu übertragen.

Neben diesen lokalen Merkmalen können die Mittel zur Auswahl und/oder Aktivierung bestimmter Funktionalitäten auch globale Merkmale aufweisen. So können die Mittel beispielsweise eine Funktionalität aufweisen, mittels derer über das Endgerät E-mails erzeugt und an andere Endgeräte übertragen werden können. Ebenso ist es denkbar, daß über die Mittel eine Verbindung des Endgeräts mit dem Internet hergestellt werden kann, so daß über das Endgerät auch im Internet gesurft werden kann.

Vorteilhaft kann das Endgerät eine interne Kommunikationseinrichtung aufweisen, wobei die Kommunikationseinrichtung zumindest zeitweilig mit dem Interaktionskanal zusammenwirkt. Ebenso kann die Kommunikationseinrichtung ausgestaltet sein, um zumindest zeitweilig mit dem Vorwärtskanal zusammenzuwirken. In weiterer Ausgestaltung ist auch denkbar, daß das Endgerät zumindest zeitweilig mit einer externen Kommunikationseinrichtung zusammenwirkt, wobei die Kommunikationseinrichtung zumindest zeitweilig mit dem Interaktionskanal zusammenwirkt. Wenn der Interaktionskanal mittels eines Mobilfunknetzes erzeugt wird, kann es sich bei der Kommunikationseinrichtung beispielsweise um ein Mobiltelefon oder dergleichen handeln, das mit dem Endgerät über eine geeignete Schnittstelle, beispielsweise eine Infrarot-Schnittstelle, Bluetooth oder dergleichen, zusammenwirkt.

Durch die vorliegende Erfindung, insbesondere beim Zusammenspiel eines unidirektionalen digitalen Rundfunknetzes und eines bidirektionalen Telekommunikationsnetzes ist es möglich, eine effiziente Zustellung von Informationsdaten an die Nutzer zu gewährleisten. Neben der eigentlichen Inhaltsübertragung können alle für einen kommerziellen Betrieb nötigen Funktionen zur Zuverlässigkeit und Sicherheit sichergestellt werden. Die Vorteile bestehen insbesondere in der effizienten Übertragung breitbandiger Inhalte von Informationsdaten zu jeder Zeit an die Nutzer. Mittels der vorliegenden Erfindung werden insbesondere auch mobile Nutzer adressiert.

Nachfolgend wird beispielhaft beschrieben, wie die vorstehend erläuterten Verfahrens- und Systemmerkmale vorteilhaft im Zusammenhang mit einer elektronischen Zeitung umgesetzt werden können.

Im Zusammenhang mit der Übertragung von Informationsdaten in Form einer elektronischen Zeitung kann durch die vorliegende Erfindung zunächst gewährleistet werden, daß jeweils die aktuellsten Informationen zu jeder Zeit, überall auf das Endgerät eines Nutzers übertragen werden können.

Im Zusammenhang mit der Übertragung von Printmedieninhalten in Form einer elektronischen Zeitung ist es weiterhin auch möglich, unterschiedliche Arten des inhaltlichen Angebots vorzusehen. So ist es beispielsweise denkbar, aktuelle Nachrichten und getrennt davon lokale Nachrichten zur Verfügung zu stellen. Aktuelle Nachrichten können beispielsweise aus verschiedenen Rubriken, wie beispielsweise Politik, Sport, Wirtschaft und dergleichen stammen. Nachdem der Nutzer die ihn interessierenden Informationstypen ausgewählt hat, können ihm diese im Endgerät dargestellt werden. Dabei ist es möglich, daß die Informationsdaten in Textform und Bildern dargestellt werden. Darüber hinaus können besonders wichtige bzw. interessante Meldungen mit Videodaten ergänzt werden. Über den Interaktionskanal kann den Nutzern die Möglichkeit gegeben werden, ihre Meinung zu Inhalten zu äußern. Diese Rückmeldungen können dazu dienen, das Angebot der elektronischen Zeitung zu überarbeiten und an die Wünsche der Kunden anzupassen. Auch Leserbriefe im klassischen Sinn, Rückmeldungen auf Anzeigen/Inserate und Diskussionsforen können interessante Möglichkeiten zur Interaktion darstellen.

Lokale Nachrichten können beispielsweise räumlich begrenzte Gebiete, wie beispielsweise Städte und dergleichen betreffen. Derartige Lokal-Informations-Daten könnten etwa Tips zur Freizeitgestaltung umfassen, beispielsweise in der Form eines tageszeitabhängigen Angebots. Derartige Angebote können mit aktuellen Web-Cam-Bildern des betroffenen Orts ausgestaltet werden und mit attraktiven Interaktionsmöglichkeiten kombiniert werden. Beispielsweise kann dem Nutzer auf diese Weise gezeigt werden, welche Freibäder geöffnet haben, welches Wetter gerade in einem nahe gelegenem Skigebiet herrscht oder welche speziellen Veranstaltungen an diesem Abend stattfinden und was dort jeweils geboten wird. Rückfragen, etwa zu Preisen und dergleichen, könnte der Nutzer dann durch eine E-mail-Verbindung beantwortet bekommen. Denkbar ist auch, auf dem Interaktionskanal und/oder einem hierfür vorgesehenen Vorwärtskanal Informationen über den aktuellen Aufenthaltsort des Nutzers an das Endgerät zu senden und diese bei der Auswahl der Angebote zu berücksichtigen (sogenannte Location-Based-Services).

Wenn in übertragenen Informationsdaten beispielsweise Worte vorkommen, die der Nutzer nicht kennt, kann er sich über den Interaktionskanal beispielsweise die passenden Erläuterungen besorgen. Hierzu ist insbesondere vorgesehen, daß der Nutzer das entsprechende Wort auf seinem Endgerät markiert und anschließend über den Interaktionskanal eine Anfrage an die zentrale Rechnereinheit startet. Auf ähnlich Weise könnten beispielsweise auch Übersetzungen von Informationsdaten in Form von Artikeln, zusätzliche historische Informationen und dergleichen erzeugt werden.

Auch könnten die übertragenen Informationsdaten unspezifizierte Informationsdaten enthalten. Hierbei könnte es sich um Spiele, um Gedankenspiele wie Kreuzworträtsel, Frage-Und-Antwortspiele und dergleichen handeln. Diese Spiele könnten über den Vorwärtskanal auf das Endgerät übertragen und dort gespielt werden. Vom Nutzer gefundene Lösungen könnten anschließend über den Interaktionskanal zurück übertragen und in der zentralen Rechnereinheit ausgewertet werden. Auf diese Weise wäre es auch möglich, in der elektronischen Zeitung - ähnlich wie bei gedruckten Zeitungen auch - Preisrätsel zu veranstalten.

Auch kann über den Interaktionskanal beispielsweise direkt auf Angebote, die über den Vorwärtskanal übertragen werden, reagiert werden. Angebote, die sich in der elektronischen Zeitung befinden und über den Vorwärtskanal auf das Endgerät des Nutzers übertragen werden, können von diesem auf dem Endgerät gleich ausgewertet werden. Dazu ist es grundsätzlich auch möglich, dass der Nutzer über den Interaktionskanal entweder mit der zentralen Rechnereinheit oder mit dem Anbieter direkt Kontakt aufnimmt, um weitere Informationen über das bestimmte Angebot zu erhalten. Schließlich könnte der Nutzer über den Interaktionskanal eine Anfrage zu, oder eine Annahme eines Angebots an die zentrale Rechnereinheit schicken, wo dann die entsprechenden Daten weiterverarbeitet werden.

Durch das erfindungsgemäße Verfahren sowie das erfindungsgemäße System ist es weiterhin möglich, die elektronische Zeitung mit sogenannten "News-Tickern" auszustatten. Hierbei handelt es sich um die Übermittlung von jeweils hochaktuellen Informationen. Diese zeichnen sich dadurch aus, daß sie sich in der Regel sehr schnell ändern und daher nur eine kurze Lebensdauer haben. Diese "News-Ticker"-Informationen können auf unterschiedliche Weise auf das Endgerät des Nutzers übertragen werden. So ist es beispielsweise möglich, diese über den Interaktionskanal zu übertragen, was eine große Flexibilität bedeutet, allerdings auch mit Kosten (Verbindungskosten) verbunden ist. Alternativ ist es auch möglich, die Informationen über den Vorwärtskanal zu übertragen. Da die Informationsdaten vorteilhaft in Datenblöcken, insbesondere mit unterschiedlichen Prioritäten übertragen werden, könnten sich "News-Ticker"-Informationen vorteilhaft in Datenblöcken befinden, die relativ häufig übertragen werden. Dadurch ist ebenfalls eine schnelle Aktualisierung gewährleistet.

Wie weiter oben bereits ausgeführt wurde, kann die Zugriffsmöglichkeit des Nutzers auf das über den Vorwärtskanal übertragene Angebot an Informationsdaten genau festgelegt werden. Durch die weiter oben beschriebenen Prozeduren ist es besonders einfach möglich, dem Nutzer nur ausgewählte Teilbereiche des Gesamtangebots zur Verfügung zu stellen. So kann dem Nutzer auf besonders einfache Weise die Genehmigung zur Verwertung bestimmter Informationsdatenteile erteilt, aber auch wieder entzogen werden, beziehungsweise ein zu einem früheren Zeitpunkt festgelegtes Verwertungsprofil jederzeit bequem und problemlos abgeändert werden.

Über den Interaktionskanal ist es dem Nutzer insbesondere auch möglich, in den über die zentrale Rechnereinheit direkt oder indirekt zugänglichen Archiven der elektronischen Zeitung zu recherchieren. Beispielsweise kann eine Recherche direkt über den Interaktionskanal erfolgen. Der Nutzer überträgt über den Interaktionskanal seine Anfrage und erhält über diesen auch seine Ergebnisse. Dies läßt ebenfalls eine sehr genaue Abrechenbarkeit des Service zu. Natürlich wäre es auch möglich, die vom Nutzer über den Interaktionskanal angeforderten Information über den Vorwärtskanal zu übertragen. Dabei muss dann sichergestellt sein, daß der Nutzer, insbesondere wenn die über den Vorwärtskanal übertragenen Informationsdaten verschlüsselt sind, diese auch tatsächlich entschlüsseln kann. Dazu könnten beispielsweise die erforderlichen Entschlüsselungsinformationen von der zentralen Rechnereinheit zunächst über den Interaktionskanal auf die Endeinrichtung des Nutzers übertragen werden.

Schließlich kann es für den Nutzer eines als elektronische Zeitung ausgebildeten Endgeräts bei einer entsprechenden Ausgestaltung desselben auch ermöglicht werden, einmal empfangene Informationsdaten nicht nur zu speichern, sondern auch weiterzuverarbeiten. Denkbar wäre beispielsweise, daß das Endgerät Funktionen beinhaltet, die ein Markieren, mit Notizen versehen, Hervorheben und dergleichen von Informationsdaten ermöglichen. Auch kann das Endgerät vorteilhaft Funktionalitäten beinhalten, mittels derer der Nutzer die empfangenen Informationen interaktiv bearbeiten und verwerten kann.

Die Erfindung wird nun anhand von Ausführungsbeispielen unter Bezugnahme auf die beiliegenden Zeichnungen näher erläutert. Es zeigen:
- Figur 1: eine schematische Vergleichsansicht eines Verfahrens zum Übertragen von Informationen in der bisher bekannten Weise sowie eines Verfahrens zum elektronischen Übertragen von Informationsdaten gemäß der vorliegenden Erfindung;
- Figur 2: in schematischer Darstellung eine Ausführungsform eines erfindungsgemäßen Systems zum elektronischen Übertragen von Informationsdaten;
- Figur 3: eine möglichen Übertragungszyklus von Datenblöcken der Informationsdaten;
- Figur 4: ein erstes Ausführungsbeispiel eines Endgeräts zum Empfang der übertragenen Informationsdaten;
- Figur 5: eine weitere Ausführungsform eines Endgeräts zum Empfang von Informationsdaten; und
- Figur 6: noch ein weiteres Ausführungsbeispiel eines Endgeräts zum Empfang von Informationsdaten.

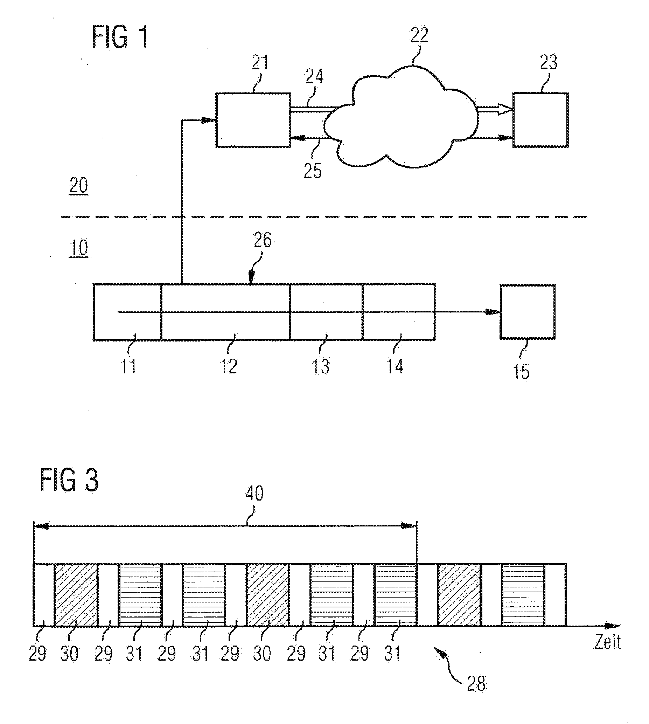

In den Figuren 1 bis 6 wird ein System sowie ein Verfahren zum elektronischen Übertragen von Informationsdaten in Form von Printmedieninhalten beschrieben, so daß die dargestellten Ausführungsbeispiele die Übertragung von Informationsdaten in Form einer elektronischen Zeitung betreffen.

In Figur 1 ist im unteren Bereich zunächst ein Modell 10 dargestellt, das die Herstellung und den Vertrieb einer klassischen, auf Papierbasis hergestellten Zeitung 15 verdeutlicht. Bei der klassischen Herstellung einer Zeitung werden in einem ersten Schritt 11 zunächst die entsprechenden Informationen erstellt. In einem sich daran anschließenden Schritt 12 erfolgt die redaktionelle Überarbeitung und Fertigstellung der zu veröffentlichenden Informationen. Anschließend wird die Zeitung in einem nächsten Schritt 13 gedruckt, bevor sie in einem anschließenden Schritt 14 in den Verkauf gelangt. Als Endprodukt landet die Zeitung 15 schließlich bei dem Kunden.

Im oberen Teil von Figur 1 ist ein Modell zur Erzeugung einer elektronischen Zeitung dargestellt. Hierfür ist ein System 20 zum elektronischen Übertragen von Informationsdaten vorgesehen. Das System 20 verfügt zunächst über eine zentrale Rechnereinheit 21, die zumindest zeitweilig mit einer Datenquelle 26 zusammenwirkt. Die Datenquelle 26 kann beispielsweise der Redaktion eines Zeitungsverlags zugeordnet sein, in der die Zeitungsinhalte erzeugt werden. Üblicherweise erfolgt die redaktionelle Überarbeitung der erzeugten Inhalte (Schritt 12 in Modell 10) in elektronischer Form, so daß diese Daten auch als Informationsdaten für die elektronische Zeitung verwendet werden können. Die Informationsdaten werden von der zentralen Rechnereinheit 21 über ein hybrides Übertragungsnetz 22, das aus wenigstens einem Vorwärtskanal 24 sowie wenigstens einem Interaktionskanal 25 besteht, auf ein Endgerät 23 eines Nutzers übertragen. Bei dem Vorwärtskanal 24 handelt es sich beispielsweise um einen Broadcast-Kanal zur breitbandigen Übertragung der Informationsdaten. Bei dem Interaktionskanal 25 handelt es sich beispielsweise um einen Kanal auf der Basis eines Telekommunikationsnetzes, insbesondere eine Mobilfunknetzes. In dem Endgerät 23 des Nutzers können die über den Vorwärtskanal 24 übertragenen Informationsdaten anschließend dargestellt werden. Jedes Endgerät 23 hat die Möglichkeit, über den ihm zugeordneten Interaktionskanal 25 mit der zentralen Rechnereinheit 21 zu kommunizieren und zu interagieren. Das System 20 kann beliebig viele Endgeräte 23 aufweisen.

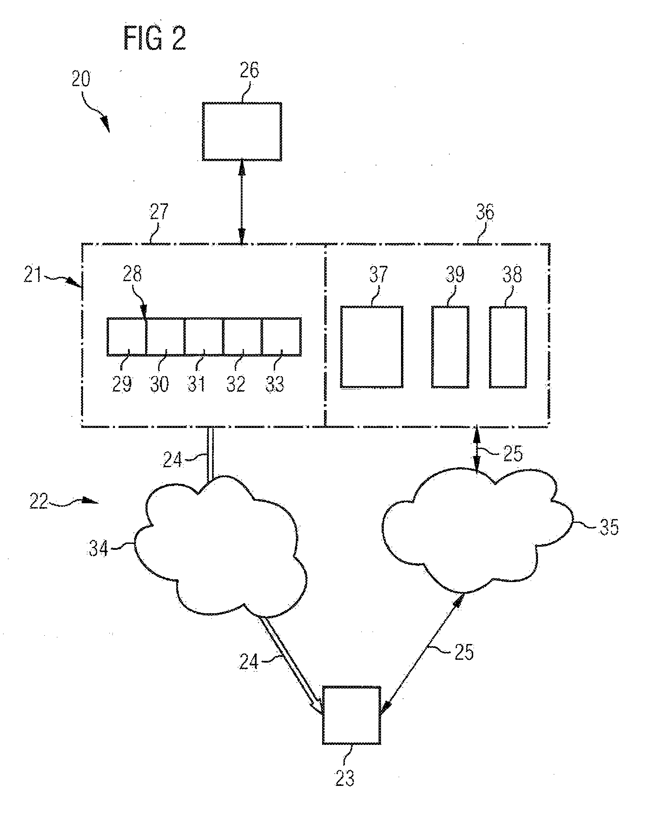

Der genaue Aufbau sowie die Funktionsweise des Systems 20 zum elektronischen Übertragen von Informationsdaten wird nachfolgend im Zusammenhang mit der Figur 2 beschrieben. Ein zentrales Bauelement des Systems 20 stellt die zentrale Rechnereinheit 21 dar. Die zentrale Rechnereinheit 21 erhält die zu übertragenden Informationsdaten 28 von der Datenquelle 26. Anschließend werden die Informationsdaten 28 in der zentralen Rechnereinheit über geeignete Mittel 27 in eine Anzahl von Datenblöcken 29 bis 33 aufgeteilt. Diese Datenblöcke 29 bis 33 werden anschließend über den Vorwärtskanal 24, der im vorliegenden Beispiel Bestandteil eines digitalen Rundfunknetzes 34 ist, - beispielsweise mittels DVB (Digital Video Broadcasting) - auf das Endgerät 23 des Nutzers übertragen. Vorzugsweise ist dabei vorgesehen, daß die Informationsdaten 28 vor ihrer Übertragung in der zentralen Rechnereinheit 21, die dazu die Mittel 27 zur Erzeugung von Informationsdaten vorsieht, verschlüsselt werden. Die verschlüsselten Informationsdaten werden anschließend in Form breitbandiger Inhalte übertragen, so daß sie jederzeit, an jedem Ort von einem Endgerät 23 eines Nutzers empfangen werden können.

Vorteilhafterweise ist dabei vorgesehen, daß die in die unterschiedlichen Datenblöcke 29 bis 31 aufgeteilten Informationsdaten zyklisch über den Vorwärtskanal 24 übertragen werden. Dies ist beispielhaft im Zusammenhang mit Figur 3 dargestellt.

In Figur 3 sind die Informationsdaten 28 zur besseren Übersicht nur in drei unterschiedliche Datenblöcke 29, 30, 31 aufgeteilt. Jeder der Datenblöcke 29, 30, 31 soll eine unterschiedliche Priorität aufweisen, so daß die Datenblöcke 29, 30, 31 innerhalb eines Zyklus 40 nach Prioritäten geschachtelt über den Vorwärtskanal 24 übertragen werden. Dies soll anhand eines Beispiels erläutert werden. Ausgegangen werden soll dabei pauschal von 100 gleichzeitigen, verschiedenen Nachrichten aus z. B. 10 bis 20 Bereichen wie etwa Politik, Sport, Wirtschaft/Finanzen, Wissenschaft, Technik, Internet, News, Kultur und dergleichen. Diese Gesamtinformationsdaten 28 werden in die drei Datenblöcke "News-flash" 29 (Übersicht aller 100 Meldungen mit kurzem Übersichtstext), "Zusatzdaten" 30 (ausführlicherer Text und Bild für die Meldungen) sowie Videodaten 31 aufgeteilt. Darüber hinaus werden die Videodaten 31 pro Zyklus 40 gesplittet übertragen. Wie aus Figur 3 ersichtlich ist, wird der Newsflash 29 wesentlich häufiger wiederholt, damit der Nutzer nach Aktivieren seines Endgeräts 23 zumindest sehr schnell die Informationsübersicht zur Verfügung hat. Um die Videodaten 31 komplett herunterladen und ansehen zu können, muß sich der Nutzer entsprechend länger gedulden. Ebenso werden auch die Zusatzinformationen 30 seltener wiederholt als die Newsflash-Informationen 29, so daß auch das Herunterladen dieser Informationen länger dauert als das Herunterladen der Newsflash-Informationen 29.

Zurückkommend zu Figur 2 verfügt die zentrale Rechnereinheit 21 des Systems 20 weiterhin über Mittel 36 zum Erzeugen und/oder Verarbeiten von Interaktionsdaten. Diese Mittel 36 agieren über den Interaktionskanal 25, bei dem es sich um einen Bestandteil eines Telekommunikationsnetzes 35, insbesondere eines Mobilfunknetzes handelt, mit dem Endgerät 23. Im Vergleich zu dem breitbandigen unidirektionalen Vorwärtskanal 24, der die Informationsdaten von der zentralen Rechnereinheit 21 zum Endgerät 23 überträgt, überträgt der im Ausführungsbeispiel bidirektionale, schmalbandige Interaktionskanal 25 Daten in beiden Richtungen zwischen der zentralen Rechnereinheit 21 und dem Nutzer bzw. dessen Endgerät 23. Dies beinhaltet auf einem Rückwärtspfad auch Anfragen oder Antworten vom Nutzer an die zentrale Rechnereinheit 21.

Die Mittel 36 zum Erzeugen und/oder Verarbeiten von Interaktionsdaten können zunächst Profildaten 38 umfassen, die den Nutzer genauer charakterisierende Daten umfassen. Beispielsweise können diese Profildaten 38 Kennungsdaten, Daten über Interessen des Nutzers, Daten über das Geschlecht des Nutzers und dergleichen erhalten. Diese Profildaten 38 werden vom Nutzer zunächst erzeugt und auf die zentrale Rechnereinheit 21 übertragen. Dort können die Profildaten 38 in einer geeigneten Speichereinrichtung (nicht explizit dargestellt) abgespeichert werden.

Wenn die Informationsdaten 28 verschlüsselt über den Vorwärtskanal 24 übertragen werden, ist es erforderlich, daß der Nutzer die übertragenen Informationsdaten 28 in seinem Endgerät 23 zunächst entschlüsselt, um diese weiter nutzen zu können. Aus diesem Grund ist es notwendig, daß dem Nutzer dafür geeignete Entschlüsselungsinformationen 37 zur Verfügung gestellt werden.

In dem in Figur 2 dargestellten Ausführungsbeispiel soll vorgesehen sein, daß der Nutzer einen sogenannten "Pay per read" Service in Anspruch nimmt. Das bedeutet, daß der Nutzer für jede Information, die er auf seinem Endgerät 23 lesen möchte, einen bestimmten Preis zu entrichten hat.

Um die ihn interessierenden Informationsdaten 28 auswählen zu können, kann es beispielsweise vorgesehen sein, daß neben den verschlüsselten Informationsdaten 28 über den Vorwärtskanal 24 auch unverschlüsselte Inhaltsdaten übertragen werden, die der Nutzer ohne eine besondere Entschlüsselung auf seinem Endgerät 23 lesen kann. Ebenso ist es natürlich auch denkbar, daß solche Inhaltsdaten über den Interaktionskanal 25 übertragen werden.

Nachdem der Nutzer sein Endgerät 23 aktiviert hat, werden entsprechende Profildaten über den Interaktionskanal 25 an die zentrale Rechnereinheit 21 übertragen, wo diese mit den dort abgelegten Profildaten 38 verglichen werden. Sobald die Zugangsberechtigung des Nutzers bestätigt worden ist, ist es diesem möglich, aus den Inhaltsdaten die ihn interessierenden Informationsdaten auszuwählen. Die Auswahl der gewünschten Informationsdaten nimmt der Nutzer über sein Endgerät 23 vor. Anschließend wird die Auswahl über den Interaktionskanal 25 in Form sogenannter Interaktionsdaten an die zentrale Rechnereinheit 21 übertragen. In der zentralen Rechnereinheit 21 werden für die Entschlüsselung der angeforderten Informationsdaten geeignete Entschlüsselungsinformationen 37 generiert und über den Interaktionskanal 25 an das Endgerät 23 des Nutzers übertragen. Mittels dieser Entschlüsselungsinformationen 37 ist es dem Nutzer nunmehr möglich, die von ihm angeforderten Informationsdaten 28 zu entschlüsseln.

Gleichzeitig können auf der Basis der vom Nutzer über den Interaktionskanal 25 geschickten Anforderungsdaten in der zentralen Rechnereinheit 21 automatisch Informationsdaten 39 zur Kostenabrechnung generiert werden.

Gemäß einem anderen Ausführungsbeispiel ist es auch möglich, daß der Nutzer des Systems 20 beispielsweise ein Abonnement über eine bestimmte Menge bzw. über bestimmte Typen von Informationsdaten 28 abschließt. Die Informationen über ein solches Abonnement können beispielsweise in den Profildaten 28 des Nutzers abgelegt sein. Gegen eine Pauschalgebühr ist es dem Nutzer dann möglich, die von ihm abonnierten Informationsdaten 38 jederzeit zu entschlüsseln. Zu diesem Zweck können dem Nutzer von der zentralen Rechnereinheit 21 entsprechende Entschlüsselungsinformationen 37 über den Interaktionskanal 25 übertragen werden. In diesem Fall ist es dem Nutzer während der Laufdauer seines Abonnements jederzeit möglich, die über den Vorwärtskanal 24 übertragenen, verschlüsselten Informationsdaten 28 in seiner Endeinrichtung 23 zu entschlüsseln. Sollte der Nutzer in einem solchen Fall an der Übertragung zusätzlicher Informationsdaten interessiert sein, ist es ihm jederzeit möglich, diese über den Interaktionskanal 25 separat anzufordern, wie dies im allgemeinen Beschreibungsteil bereits beschrieben worden ist.

Über den Interaktionskanal 25 ist es dem Nutzer weiterhin möglich, mittels seines Endgeräts 23 Interaktionsdaten zu erzeugen, die sich auf bestimmte Inhalte der übertragenen Informationsdaten 28 beziehen. Beispielsweise ist es möglich, daß der Nutzer über sein Endgerät 23 zu einem übertragenen Artikel einen Leserbrief verfaßt, und diesen über den Interaktionskanal 25 an die zentrale Rechnereinheit 21 überträgt. In der zentralen Rechnereinheit 21 kann dieser Leserbrief in die entsprechenden Informationsdaten 28 integriert werden, so daß diese Informationsdaten 28 zu einem späteren Zeitpunkt in der aktualisierten Fassung über den Vorwärtskanal 24 übertragen werden können.

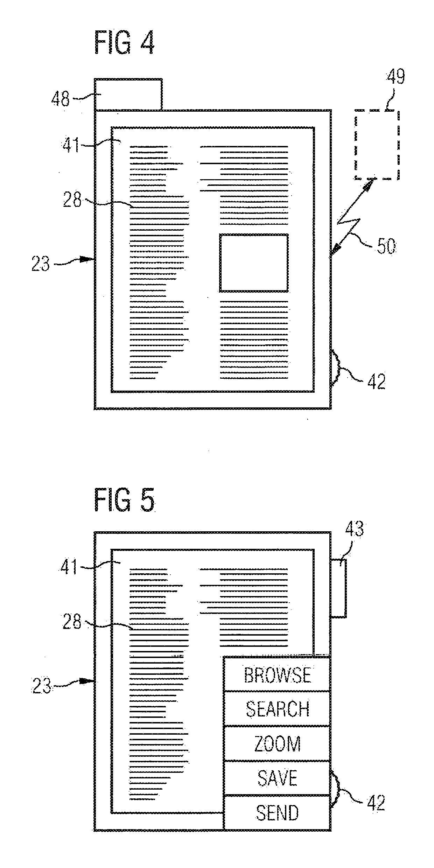

Im Zusammenhang mit den Figuren 4 bis 6 sind schließlich einige Ausführungsbeispiele für geeignete Endgeräte 23 dargestellt. Vorteilhaft kann vorgesehen sein, daß die Endgeräte 23 zumindest teilweise eine flexible Gestalt aufweisen und über eine Anzeigeeinrichtung 41 verfügen, auf der die übertragenen Informationsdaten 28 dargestellt werden können. Auf diese Weise erhält das Endgerät 23 eine einer herkömmlichen Zeitung zumindest ähnliche Konfiguration, so daß der Nutzer auch nach wie vor das Gefühl hat, eine tatsächliche Zeitung in der Hand zu halten.

Das Endgerät 23 kann weiterhin Mittel 42 zur Auswahl/ Aktivierung von bestimmten Funktionalitäten aufweisen, wobei das Mittel 42 in den Ausführungsbeispielen gemäß den Figuren 4 bis 6 als Selektionsrad ausgebildet ist.

Um eine Verbindung der Endeinrichtung 23 mit dem Interaktionskanal 25 herstellen zu können, benötigt dieses eine geeignete Schnittstelle. Hierbei kann es sich beispielsweise um eine geeignete Kommunikationseinrichtung handeln, mittels derer das Endgerät 23 zumindest zeitweilig mit dem Interaktionskanal 25 verbunden ist. Bei der Kommunikationseinrichtung kann es sich beispielsweise um eine interne Kommunikationseinrichtung 48 handeln. Eine solche Ausgestaltung hat den Vorteil, daß der Nutzer lediglich ein einziges Gerät benötigt. Ebenso ist es natürlich auch denkbar, daß die Kommunikationseinrichtung als externe Kommunikationseinrichtung 49 ausgebildet ist. Eine solche Ausgestaltung ist in Figur 4 gestrichelt angedeutet. In einem solchen Fall muß die Kommunikationseinrichtung 49 über eine geeignete Kommunikationsverbindung 50 mit der Endeinrichtung 23 verbunden sein. Beispielsweise kann vorgesehen sein, daß die Kommunikationseinrichtung 49 als Mobiltelefon ausgebildet ist. In einem solchen Fall kann die Kommunikationsverbindung 50 beispielsweise mittels einer Infrarot-Schnittstelle, mittels Bluetooth oder dergleichen realisiert werden.

Während des Betriebs ist es möglich, daß der Nutzer über die Mittel 42 verschiedene Funktionalitäten in seiner Endeinrichtung 23 aufruft bzw. aktivieren kann. Beispiele hierfür sind im Zusammenhang mit Figur 5 dargestellt. Beispielsweise kann es vom Nutzer gewünscht sein, die auf sein Endgerät übertragenen Informationsdaten 28 zu speichern. In diesem Fall wird er über die Auswahlmittel 42 das entsprechende Funktionsfeld "save" aktivieren. Dadurch kann er die Informationsdaten 28 auf einer geeigneten, der Endeinrichtung 23 zugeordneten Speichereinrichtung 43 speichern. Im vorliegenden Ausführungsbeispiel ist die Speichereinrichtung 43 als Speicherkarte ausgebildet, die lösbar mit der Endeinrichtung 23 verbunden ist.

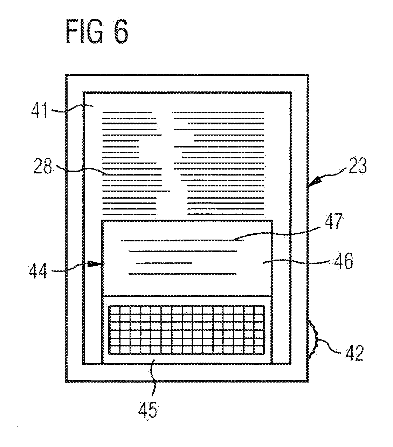

Weiterhin kann die Endeinrichtung 23 auch über eine Eingabevorrichtung 44 verfügen, mittels derer der Nutzer Interaktionsdaten erzeugen kann. Ein Beispiel hierzu ist in Figur 6 dargestellt. Die Eingabevorrichtung 44 kann beispielsweise über eine entsprechende Betätigung der Auswahl- /Aktivierungsmittel 42 aktiviert werden. Die Eingabevorrichtung kann beispielsweise eine Eingabetastatur 45 sowie ein Eingabefenster 46 aufweisen. Insbesondere dann, wenn die Anzeigeeinrichtung 41 als sogenannter Touchscreen ausgebildet ist, kann die Eingabe von Interaktionsdaten 47 über entsprechende Berührungen von Bereichen der Eingabetastatur 45 erfolgen. Auf diese Weise kann der Nutzer auf seiner Endeinrichtung 23 die von ihm gewünschten Interaktionsdaten 47 erstellen. Diese Interaktionsdaten 47 werden anschließend von der Endeinrichtung 23 über den Interaktionskanal 25 zur zentralen Rechnereinheit 21 übertragen, wo sie weiterverarbeitet - beispielsweise in die über den Vorwärtskanal 24 zu übertragenen Informationsdaten 28 integriert - werden können.

Durch die vorliegende Erfindung ist es nunmehr in einer für den Nutzer des Systems ansprechenden Weise möglich geworden, Nachrichten in multimedialer Form, ähnlich einer Zeitungsstruktur, auf einem elektronischen Endgerät anbieten zu können.

### Bezugszeichenliste

- 10: Modell klassische Zeitung
- 11: Informationserstellung
- 12: redaktionelle Überarbeitung
- 13: Druck
- 14: Verkauf
- 15: Zeitung (Endprodukt)

- 20: System zum elektronischen Übertragen von Informationsdaten
- 21: zentrale Rechnereinheit
- 22: hybrides Übertragungsnetz
- 23: Endgerät
- 24: Vorwärtskanal
- 25: Interaktionskanal
- 26: Datenquelle
- 27: Mittel zum Erzeugen von Informationsdaten
- 28: Informationsdaten
- 29 - 33: jeweils Datenblock
- 34: digitales Rundfunknetz
- 35: Telekommunikationsnetz
- 36: Mittel zum Erzeugen und/oder Verarbeiten von Interaktionsdaten
- 37: Entschlüsselungsinformation
- 38: Profildaten
- 39: Information zur Kostenabrechnung
- 40: Zyklus
- 41: Anzeigeeinrichtung
- 42: Mittel zur Auswahl /Aktivierung von Funktionalitäten
- 43: Speichereinrichtung
- 44: Eingabevorrichtung
- 45: Eingabetastatur
- 46: Eingabefenster
- 47: Interaktionsdaten
- 48: interne Kommunikationseinrichtung
- 49: externe Kommunikationseinrichtung
- 50: Kommunikationsverbindung

## Patentansprüche

1. Verfahren zum elektronischen Übertragen von Informationsdaten (28), insbesondere von Informationsdaten in Form von Printmedieninhalten, über ein hybrides Übertragungsnetz (22), das wenigstens einen Vorwärtskanal (24), wenigstens einen Interaktionskanal (25), wenigstens eine zentrale Rechnereinheit (21), die zumindest zeitweilig mit wenigstens einer Datenquelle (26) zusammenwirkt, und wenigstens ein einem Nutzer des Systems zugeordnetes Endgerät (23) aufweist, wobei die Informationsdaten (28) über den wenigstens einen Vorwärtskanal (24) von der zentralen Rechnereinheit (21) an das wenigstens eine Endgerät (23) übertragen werden, wobei das wenigstens eine Endgerät (23) über den wenigstens einen Interaktionskanal (25) zumindest zeitweilig mit der zentralen Rechnereinheit (21) interagiert, und wobei die Informationsdaten (28) zumindest teilweise verschlüsselt über den Vorwärtskanal (24) übertragen werden und verschlüsselte Informationsdaten innerhalb des wenigstens einen Endgeräts (23) zumindest teilweise entschlüsselt werden, **dadurch gekennzeichnet, dass**
die Informationsdaten (28) in zwei oder mehr Datenblöcke (29 - 33) aufgeteilt werden und die Datenblöcke (29 - 33) zyklisch über den Vorwärtskanal (24) übertragen werden, dass von der zentralen Rechnereinheit (21) Entschlüsselungsinformationen (37) über den Interaktionskanal (25) auf das Endgerät (23) übertragen werden, über die der Umfang festgelegt wird, in welchem dem Nutzer die über den Vorwärtskanal (24) übertragenen Informationsdaten (28) zugänglich gemacht werden und dass mittels der Entschlüsselungsinformationen (37) zumindest ein Bestandteil der über den Vorwärtskanal (24) übertragenen, verschlüsselten Informationsdaten (28) dynamisch je nach Bezugsmodell in dem Endgerät (23) entschlüsselt wird, und dass in der zentralen Rechnereinheit (21) zunächst bestimmte Informationsdateninhalte festgelegt werden die von einem Nutzer auf einen anderen Nutzer übertragen werden dürfen, und dass die dazu erforderlichen Informationen zusammen mit den entsprechenden Entschlüsselungsinformationen von der zentralen Rechnereinheit (21) auf das Endgerät (23) übertragen werden und dass nur entsprechend markierte Informationsdaten nach der Übertragung auf ein Endgerät von diesem Endgerät (23) mittels eines Übertragungsverfahrens auf wenigstens ein anderes Endgerät übertragen werden.

2. Verfahren nach Anspruch 1, **dadurch gekennzeichnet, dass** die Informationsdaten (28) in Datenblöcke (29 - 33) unterschiedlicher Priorität aufgeteilt werden und dass die Datenblöcke (29 - 33) nach Prioritäten geschachtelt über den Vorwärtskanal (24) übertragen werden und/oder dass die zyklische Übertragung der Datenblöcke (29 - 33) dynamisch erfolgt.

3. Verfahren nach Anspruch 1 oder 2, **dadurch gekennzeichnet, dass** die auf das Endgerät (23) übertragenen Informationsdaten (28) in diesem automatisch auf Vollständigkeit überprüft werden, und dass beim Fehlen einzelner Bestandteile der übertragenen Informationsdaten diese vom Endgerät (23) über den Interaktionskanal (25) automatisch angefordert werden, oder dass die auf das Endgerät (23) übertragenen Informationsdaten (28) in diesem automatisch auf Vollständigkeit überprüft werden und dass beim Fehlen einzelner Bestandteile der übertragenen Informationen diese bei einer nächsten zyklischen Übertragung der entsprechenden Informationsdaten vom Endgerät (23) automatisch in die bereits übertragenen Informationsdaten integriert werden.

4. Verfahren nach einem der Ansprüche 1 bis 3, **dadurch gekennzeichnet, dass** in der zentralen Rechnereinheit (21) elektronisch Interaktionsdaten erzeugt werden und dass die erzeugten Interaktionsdaten über den Interaktionskanal (25) zu wenigstens einem Endgerät (23) übertragen werden und/oder dass ein Nutzer auf dem ihm zugeordneten Endgerät (23) elektronisch Interaktionsdaten (47) erzeugt und dass die erzeugten Interaktionsdaten (47) über den Interaktionskanal (25) zu der zentralen Rechnereinheit (21) übertragen werden, oder dass im Endgerät (23) elektronisch automatisch Interaktionsdaten erzeugt werden und dass die erzeugten Interaktionsdaten über den Interaktionskanal (25) zu der zentralen Rechnereinheit (21) übertragen werden.

5. Verfahren nach Anspruch 4, **dadurch gekennzeichnet, dass** die Interaktionsdaten (47) in der zentralen Rechnereinheit (21) in die zu übertragenden Informationsdaten (28) integriert und gemeinsam mit diesen über den Vorwärtskanal (24) übertragen werden.

6. Verfahren nach einem der Ansprüche 1 bis 5, **dadurch gekennzeichnet, dass** die Position des wenigstens einen Endgeräts (23) über ein Standort-Ermittlungsverfahren bestimmt wird, dass die ermittelten Positionsdaten zur zentralen Rechnereinheit (21) übertragen werden und dass von der zentralen Rechnereinheit (21) zusätzlich zu den Informationsdaten (28) der Position des Endgeräts zugeordnete Lokal-Informationsdaten übertragen werden, oder dass die Position des wenigstens einen Endgeräts (23) über ein Standort-Ermittlungsverfahren bestimmt wird, dass die ermittelten Positionsdaten zur zentralen Rechnereinheit (21) übertragen werden, dass von der zentralen Rechnereinheit (21) den Positionsdaten zugeordnete Lokal-Informationsdaten in die zu übertragenden Informationsdaten (28) integriert werden und dass diese Informationsdaten anschließend auf das Endgerät (23) übertragen werden.

7. Verfahren nach einem der Ansprüche 1 bis 6, **dadurch gekennzeichnet, dass** von der zentralen Rechnereinheit (21) zumindest zu Bestandteilen der über den Vorwärtskanal (24) übertragenen Informationsdaten (28) weitergehende Detail-Informationsdaten, insbesondere in Form von Textdaten und/oder Audiodaten und/oder Videodaten und/oder Bilddaten, auf das wenigstens eine Endgerät (23) übertragen werden.

8. Verfahren nach einem der Ansprüche 1 bis 7, **dadurch gekennzeichnet, dass** zwischen der zentralen Rechnereinheit (21) und dem wenigstens einem Endgerät (23) über den Interaktionskanal (25) Informationen zum Zwecke der Authentifizierung des Nutzers übertragen werden und/oder dass zwischen der zentralen Rechnereinheit (21) und dem wenigstens einem Endgerät (23) über den Interaktionskanal (25) Informationen zum Zwecke der Kostenabrechnung übertragen werden.

9. Verfahren nach einem der Ansprüche 1 bis 8, **dadurch gekennzeichnet, dass** über den Vorwärtskanal (24) übertragene Informationsdaten (25) und/oder über den Interaktionskanal (25) übertragene Interaktionsdaten zumindest zeitweilig und zumindest teilweise in wenigstens einer Speichereinrichtung (43) abgespeichert werden und dass die Speichereinrichtung (43) zumindest zeitweilig mit dem wenigstens einen Endgerät (23) zusammenwirkt.

10. Verfahren nach einem der Ansprüche 1 bis 9, **dadurch gekennzeichnet, dass** vom Nutzer eines Endgeräts (23) elektronisch Profildaten (38) erzeugt werden, dass die Profildaten (38) in der zentralen Rechnereinheit (21) zumindest zeitweilig abgespeichert werden und dass dem Nutzer auf der Basis dieser Profildaten (38) individualisierte Informationsdaten (28) über den Vorwärtskanal (24) auf dessen Endgerät (23) übertragen werden.

11. System (20) zum elektronischen Übertragen von Informationsdaten (28), insbesondere von Informationsdaten in Form von Printmedieninhalten, aufweisend ein hybrides Übertragungsnetz (22), mit wenigstens einem Vorwärtskanal (24), wenigstens einem Interaktionskanal (25), wenigstens einer zentralen Rechnereinheit (21), die ausgebildet ist, zumindest zeitweilig mit wenigstens einer Datenquelle (26) zusammen zu wirken und wenigstens ein einem Nutzer des Systems zugeordnetes Endgerät (23), wobei das System (20) ausgebildet ist, die Informationsdaten (28) über den wenigstens einen Vorwärtskanal (24) von der zentralen Rechnereinheit (21) an das wenigstens eine Endgerät (23) zu übertragen, wobei das wenigstens eine Endgerät (23) ausgebildet ist, über den wenigstens einen Interaktionskanal (25) zumindest zeitweilig mit der zentralen Rechnereinheit (21) zu interagieren, wobei Mittel zur zumindest teilweisen Verschlüsselung der zu übertragenden Informationsdaten (28) vorgesehen sind und wobei in dem wenigstens einen Endgerät (23) Mittel zur zumindest teilweisen Entschlüsselung der übertragenen, verschlüsselten Informationsdaten vorgesehen sind, **dadurch gekennzeichnet, dass** das System (20) ausgebildet ist, die Informationsdaten (28) in zwei oder mehr Datenblöcke (29 - 33) aufzuteilen und die Datenblöcke (29 - 33) zyklisch über den Vorwärtskanal (24) zu übertragen, und dass der Interaktionskanal (25) ausgebildet ist, um von der zentralen Rechnereinheit (21) Entschlüsselungsinformationen (37), über die der Umfang festgelegt wird, in welchem dem Nutzer die über den Vorwärtskanal (24) übertragenen Informationsdaten (28) zugänglich gemacht werden, auf das Endgerät (23) zu übertragen, und dass das Endgerät (23) ausgebildet ist, mittels der Entschlüsselungsinformationen (37) zumindest ein Bestandteil der über den Vorwärtskanal (24) übertragenen, verschlüsselten Informationsdaten (28) dynamisch je nach Bezugsmodell zu entschlüsseln, und dass die zentrale Rechnereinheit (21) ausgebildet ist, um zunächst bestimmte Informationsdateninhalte festzulegen, die von einem Nutzer auf einen anderen Nutzer übertragen werden dürfen und um die dazu erforderlichen Informationen zusammen mit den entsprechenden Entschlüsselungsinformationen von der zentralen Rechnereinheit (21) auf das Endgerät (23) zu übertragen, so dass nur entsprechend markierte Informationsdaten nach der Übertragung auf ein Endgerät von diesem Endgerät (23) mittels eines Übertragungsverfahrens auf wenigstens ein anderes Endgerät übertragen werden.

12. System nach Anspruch 11, **gekennzeichnet durch** Mittel zur Durchführung des Verfahrens nach einem der Ansprüche 2 bis 10.

13. System nach einem der Ansprüche 11 oder 12, **dadurch gekennzeichnet, dass** der wenigstens eine Vorwärtskanal (24) als Broadcast-Kanal, insbesondere als Kanal für terrestrischen Broadcast, ausgebildet ist und/oder dass der wenigstens eine Vorwärtskanal (24) als unidirektionaler Kanal ausgebildet ist.

14. System nach einem der Ansprüche 11 bis 13, **dadurch gekennzeichnet, dass** der wenigstens eine Interaktionskanal (25) als bidirektionaler Kanal ausgebildet ist und/oder dass der wenigstens eine Interaktionskanal (25) als Telekommunikationskanal, insbesondere als Mobilfunkkanal, ausgebildet ist.

15. System nach einem der Ansprüche 11 bis 14 **dadurch gekennzeichnet, dass** das wenigstens eine Endgerät (23) als mobiles Endgerät ausgebildet ist.

16. System nach einem der Ansprüche 11 bis 15, **dadurch gekennzeichnet, dass** das Endgerät (23) eine interne Kommunikationseinrichtung (48) aufweist, und dass die Kommunikationseinrichtung (48) ausgebildet ist, zumindest zeitweilig mit dem Interaktionskanal (25) zusammen zu wirken.

17. System nach einem der Ansprüche 11 bis 16, **dadurch gekennzeichnet, dass** das Endgerät (23) ausgebildet ist, zumindest zeitweilig mit einer externen Kommunikationseinrichtung (49) zusammen zu wirken, und dass die Kommunikationseinrichtung (49) ausgebildet ist, zumindest zeitweilig mit dem Interaktionskanal (25) zusammen zu wirken.

## Claims

1. Method for the electronic transmission of information data (28), particularly information data in the form of print media contents, over a hybrid transmission network (22), which comprises at least one forward channel (24), at least one interactive channel (25), at least one central computer unit (21) that cooperates at least intermittently with at least one data source (26), and at least one terminal (23) assigned to a user of the system, the information data (28) being transmitted through the at least one forward channel (24) from the central computer unit (21) to the at least one terminal (23), the at least one terminal (23) interacting at least intermittently with the central computer unit (21) through the at least one interactive channel (25), and the information data (2) being transmitted through the forward channel (24) at least partially in encrypted form and encrypted information data being at least partially decrypted within the at least one terminal (23),
**characterised in that**
the information data (28) are divided into two or more data blocks (29 - 33) and the data blocks (29 - 33) are transmitted cyclically through the forward channel (24), **in that** decryption information (37) is transmitted from the central computer unit (21) through the interactive channel (25) to the terminal (23), determining the extent to which the information data (28) transmitted through the forward channel (24) are made available to the user, and **in that**, by means of the decryption information (37), at least one component of the encrypted information data (28) transmitted through the forward channel (24) is dynamically decrypted according to the reference model in the terminal (23), and **in that** initially determined information data content that is allowed to be sent from one user to another user is ascertained in the central computer unit (21), and **in that** the information necessary for this is transmitted together with the corresponding decryption information from the central computer unit (21) to the terminal (23), and **in that** only correspondingly marked information data, having been transmitted to a terminal, are transmitted from this terminal (23) to at least one other terminal by means of a transmission process.

2. Method according to claim 1, **characterised in that** the information data (28) are divided up into data blocks (29 - 33) of different priorities and the data blocks (29 - 33) nested according to their priority are transmitted through the forward channel (24) and/or the cyclic transmission of the data blocks (29 - 33) takes place dynamically.

3. Method according to claim 1 or 2, **characterised in that** the information data (28) transmitted to the terminal (23) are automatically checked for completeness therein, and if individual components of the transmitted information data are missing, these data are automatically requested by the terminal (23) through the interactive channel (25), or **in that** the information data (28) transmitted to the terminal (23) are automatically checked for completeness therein and if individual components of the transmitted information data are missing, these are automatically integrated into the information data already transmitted during the next cyclic transmission of the corresponding information data by the terminal (23).

4. Method according to one of claims 1 to 3, **characterised in that** in the central computer unit (21) interactive data are generated electronically and the interactive data generated are transmitted through the interactive channel (25) to at least one terminal (23) and/or **in that** a user generates interactive data (47) electronically on the terminal (23) assigned to him, and the interactive data (47) generated are transmitted through the interactive channel (25) to the central computer unit (21), or **in that** interactive data are automatically electronically generated in the terminal (23) and the interactive data generated are transmitted through the interactive channel (25) to the central computer unit (21).

5. Method according to claim 4, **characterised in that** the interactive data (47) are integrated in the central computer unit (21) into the information data (28) that are to be transmitted and are transmitted together with them through the forward channel (24).

6. Method according to one of claims 1 to 5, **characterised in that** the position of the at least one terminal (23) is determined by a position-detecting method, the position data determined are transmitted to the central computer unit (21) and from the central computer unit (21) local information data associated with the position of the terminal are transmitted in addition to the information data (28), or **in that** the position of the at least one terminal (23) is determined by a position-detecting method, the position data determined are transmitted to the central computer unit (21), local information data associated with the position data are integrated by the central computer unit (21) into the information data (28) to be transmitted and these information data are then transmitted to the terminal (23).

7. Method according to one of claims 1 to 6, **characterised in that** more detailed information data, particularly in the form of text data and/or audio data and/or video data and/or image data, relating to at least components of the information data (28) transmitted through the forward channel (24) are transmitted from the central computer unit (21) to the at least one terminal (23).

8. Method according to one of claims 1 to 7, **characterised in that** between the central computer unit (21) and the at least one terminal (23) information is transmitted through the interactive channel (25) for the purpose of authenticating the user and/or **in that** between the central computer unit (21) and the at least one terminal (23) information is transmitted through the interactive channel (25) for billing purposes.

9. Method according to one of claims 1 to 8, **characterised in that** information data (25) transmitted through the forward channel (24) and/or interactive data transmitted through the interactive channel (25) are stored at least temporarily and at least partly in at least one memory device (43) and **in that** the memory device (43) cooperates with the at least one terminal (23) at least intermittently.

10. Method according to one of claims 1 to 9, **characterised in that** profile data (38) are generated electronically by the user of a terminal (23), **in that** the profile data (38) are stored at least temporarily in the central computer unit (21) and **in that** on the basis of these profile data (38) individualised information data (28) are transmitted to the user on his terminal (23) through the forward channel (24).

11. System (20) for the electronic transmission of information data (28), particularly information data in the form of print media contents, comprising a hybrid transmission network (22), having at least one forward channel (24), at least one interactive channel (25), at least one central computer unit (21) which is configured to cooperate at least intermittently with at least one data source (26) and at least one terminal (23) assigned to a user of the system, wherein the system (20) is configured to transmit the information data (28) through the at least one forward channel (24) from the central computer unit (21) to the at least one terminal (23), the at least one terminal (23) being configured to interact with the central computer unit (21) at least intermittently through the at least one interactive channel (25), while means are provided for at least partial decryption of the information data (28) to be transmitted, and wherein in the at least one terminal (23) means are provided for at least partial decryption of the encrypted information data transmitted, **characterised in that** the system (20) is configured to divide the information data (28) into two or more data blocks (29 - 33) and to transmit the data blocks (29 - 33) cyclically through the forward channel (24), and **in that** the interactive channel (25) is configured to transmit decryption information (37) from the central computer unit (21), determining the extent to which the information data (28) transmitted through the forward channel (24) is made available to the user, and **in that** the terminal (23) is configured to decrypt at least part of the encrypted information data transmitted through the forward channel (24) dynamically in accordance with the reference model by means of the decryption information (37), and **in that** the central computer unit (21) is configured to detect initially determined information data contents that are allowed to be transmitted from one user to another user and to transmit the information required for this together with the corresponding decryption information from the central computer unit (21) to the terminal (23), so that only correspondingly marked information data, having been transmitted to a terminal, are transmitted from this terminal (23) to at least one other terminal by means of a transmission method.

12. System according to claim 11, **characterised by** means for carrying out the method according to one of claims 2 to 10.

13. System according to one of claims 11 or 12, **characterised in that** the at least one forward channel (24) is configured as a broadcast channel, particularly as a channel for terrestrial broadcasting, and/or **in that** the at least one forward channel (24) is configured as a unidirectional channel.

14. System according to one of claims 11 to 13, **characterised in that** the at least one interactive channel (25) is configured as a bidirectional channel and/or **in that** the at least one interactive channel (25) is configured as a telecommunications channel, particularly as a mobile telephony channel.

15. System according to one of claims 11 to 14, **characterised in that** the at least one terminal (23) is configured as a mobile terminal.

16. System according to one of claims 11 to 15, **characterised in that** the terminal (23) comprises an internal communications device (48) and **in that** the communications device (48) is configured to cooperate at least intermittently with the interactive channel (25).

17. System according to one of claims 11 to 16, **characterised in that** the terminal (23) is configured to cooperate at least intermittently with an external communications device (49), and **in that** the communications device (49) is configured to cooperate at least intermittently with the interactive channel (25).

## Revendications

1. Procédé de transmission électronique de données d'informations (28), en particulier de données d'informations sous la forme de contenus de médias écrits, par l'intermédiaire d'un réseau de transmission (22) hybride, lequel présente au moins un canal en amont (24), au moins un canal d'interaction (25), au moins une unité de calcul (21) centrale, qui coopère au moins de manière temporaire avec au moins une source de données (26), et au moins un appareil terminal (23) associé à un utilisateur du système, sachant que les données d'informations (28) sont transmises par l'intermédiaire du canal en amont (24) au moins au nombre de une de l'unité de calcul (21) centrale à l'appareil terminal (23) au moins au nombre de un, sachant que l'appareil terminal (23) au moins au nombre de un interagit au moins de manière temporaire avec l'unité de calcul (21) centrale par l'intermédiaire du canal d'interaction (25) au moins au nombre de un, et sachant que les données d'informations (28) sont transmises par l'intermédiaire du canal en amont (24) au moins en partie de manière chiffrée et que les données d'informations chiffrées sont au moins en partie déchiffrées au sein de l'appareil terminal (23) au moins au nombre de un,
**caractérisé en ce que** :
les données d'informations (28) sont réparties dans deux blocs de données (29 - 33) ou plus, lesquels blocs de données (29 - 33) sont transmis de manière cyclique par l'intermédiaire du canal en amont (24), et **en ce que** des informations de déchiffrage (37) sont transmises à l'appareil terminal (23) par l'unité de calcul (21) centrale, par l'intermédiaire du canal d'interaction (25), lesquelles informations de déchiffrage permettent de déterminer le périmètre dans lequel les données d'informations (28) transmises par l'intermédiaire du canal en amont (24) sont rendues accessibles à l'utilisateur, et **en ce qu'**au moins une composante des données d'informations (28) chiffrées transmises par l'intermédiaire du canal en amont (24) est déchiffrée de manière dynamique selon le modèle de référence dans l'appareil terminal (23) au moyen des informations de déchiffrage (37), et **en ce qu'**après certains contenus de données d'informations sont déterminés dans l'unité de calcul (21) centrale, lesquels peuvent être transmis par un utilisateur à un autre utilisateur, et **en ce que** les informations requises à cet effet sont transmises conjointement avec les informations de déchiffrage correspondantes par l'unité de calcul (21) centrale à l'appareil terminal (23), et **en ce qu'**uniquement des données d'informations marquées de manière correspondante sont transmises à au moins un autre appareil terminal, au moyen d'un procédé de transmission, après la transmission à un appareil terminal par ledit appareil terminal (23).

2. Procédé selon la revendication 1, **caractérisé en ce que** les données d'informations (28) sont réparties dans des blocs de données (29 - 33) de priorité diverse, et **en ce que** les blocs de données (29 - 33) sont transmis de manière compartimentée selon des priorités par l'intermédiaire du canal en amont (24), et/ou **en ce que** la transmission cyclique des blocs de données (29 - 33) est effectuée de manière dynamique.

3. Procédé selon la revendication 1 ou 2, **caractérisé en ce que** le caractère exhaustif des données d'informations (28) transmises à l'appareil terminal (23) est automatiquement vérifié dans ledit appareil terminal, et **en ce que**, si diverses composantes des données d'informations transmises sont manquantes, ces dernières sont automatiquement demandées par l'appareil terminal (23) par l'intermédiaire du canal d'interaction (25), ou **en ce que** le caractère exhaustif des données d'informations (28) transmises à l' appareil terminal (23) est automatiquement vérifié dans ledit appareil terminal, et **en ce que** si diverses composantes des informations transmises sont manquantes, ces dernières sont automatiquement intégrées dans les données d'informations déjà transmises dans le cadre d'une prochaine transmission cyclique des données d'informations correspondantes par l'appareil terminal (23).

4. Procédé selon l'une quelconque des revendications 1 à 3, **caractérisé en ce que** des données d'interaction sont générées de manière électronique dans l'unité de calcul (21) centrale, et **en ce que** les données d'interaction générées sont transmises par l'intermédiaire du canal d'interaction (25) à au moins un appareil terminal (23), et/ou **en ce qu'**un utilisateur génère de manière électronique sur l'appareil terminal (23) qui lui est associé des données d'interaction (47), et **en ce que** les données d'interaction (47) générées sont transmises par l'intermédiaire du canal d'interaction (25) à l'unité de calcul (21) centrale, ou **en ce que** des données d'interaction sont générées de manière automatique et de manière électronique dans l'appareil terminal (23), et **en ce que** les données d'interaction générées sont transmises par l'intermédiaire du canal d'interaction (25) à l'unité de calcul (21) centrale.

5. Procédé selon la revendication 4, **caractérisé en ce que** les données d'interaction (47) sont intégrées dans les données d'informations (28) devant être transmises, dans l'unité de calcul (21) centrale et sont transmises conjointement avec ces dernières par l'intermédiaire du canal en amont (24).

6. Procédé selon l'une quelconque des revendications 1 à 5, **caractérisé en ce que** la position de l'appareil terminal (23) au moins au nombre de un est déterminée par l'intermédiaire d'un procédé de détermination de localisation, **en ce que** les données de position déterminées sont transmises à l'unité de calcul (21) centrale, et **en ce qu'**en plus des données d'informations (28), des données d'informations relatives au lieu associées à la position de l'appareil terminal sont transmises par l'unité de calcul (21) centrale, ou **en ce que** la position de l'appareil terminal (23) au moins au nombre de un est déterminée par l'intermédiaire d'un procédé de détermination de localisation, **en ce que** les données de position déterminées sont transmises à l'unité de calcul (21) centrale, **en ce que** des données d'informations relatives au lieu associées aux données de position sont intégrées par l'unité de calcul (21) centrale dans les données d'informations (28) devant être transmises, et **en ce que** lesdites données d'informations sont pour finir transmises à l'appareil terminal (23).

7. Procédé selon l'une quelconque des revendications 1 à 6, **caractérisé en ce que** des données d'informations plus détaillées au moins concernant des composantes des données d'informations (28) transmises par l'intermédiaire du canal en amont (24), en particulier sous la forme de données de texte et/ou de données audio et/ou de données vidéo et/ou de données d'images, sont transmises à l'appareil terminal (23) au moins au nombre de un par l'unité de calcul (21) centrale.

8. Procédé selon l'une quelconque des revendications 1 à 7, **caractérisé en ce que** sont transmises, par l'intermédiaire du canal d'interaction (25), aux fins de l'authentification de l'utilisateur, des informations entre l'unité de calcul (21) centrale et l'appareil terminal (23) au moins au nombre de un, et/ou **en ce que** des informations sont transmises entre l'unité de calcul (21) centrale et l'appareil terminal (23) au moins au nombre de un, par l'intermédiaire du canal d'interaction (25), aux fins du décompte des coûts.

9. Procédé selon l'une quelconque des revendications 1 à 8, **caractérisé en ce que** des données d'informations (25) transmises par l'intermédiaire du canal en amont (24) et/ou des données d'interaction transmises par l'intermédiaire du canal d'interaction (25) sont mémorisées au moins de manière temporaire et au moins en partie dans au moins un système de mémoire (43), et **en ce que** le système de mémoire (43) coopère au moins de manière temporaire avec l'appareil terminal (23) au moins au nombre de un.

10. Procédé selon l'une quelconque des revendications 1 à 9, **caractérisé en ce que** des données de profil (38) sont générées de manière électronique par l'utilisateur d'un appareil terminal (23), **en ce que** les données de profil (38) sont mémorisées au moins de manière temporaire dans l'unité de calcul (21) centrale, et **en ce que** des données d'informations (28) propres à l'utilisateur sur la base desdites données de profil (38) sont transmises par l'intermédiaire du canal en amont (24) à l'appareil terminal (23) de ce dernier.

11. Système (20) de transmission électronique de données d'informations (28), en particulier de données d'informations sous la forme de contenus de médias écrits, présentant un réseau de transmission (22) hybride, comprenant au moins un canal en amont (24), au moins un canal d'interaction (25), au moins une unité de calcul (21) centrale, laquelle est réalisée pour coopérer au moins de manière temporaire avec au moins une source de données (26), et présentant au moins un appareil terminal (23) associé à un utilisateur du système, sachant que le système (20) est réalisé pour transmettre les données d'informations (28) par l'intermédiaire du canal en amont (24) au moins au nombre de un, par l'unité de calcul (21) centrale, à l'appareil terminal (23) au moins au nombre de un, sachant que l'appareil terminal (23) au moins au nombre de un est réalisé pour interagir au moins de manière temporaire avec l'unité de calcul (21) centrale, par l'intermédiaire du canal d'interaction (25) au moins au nombre de un, sachant que sont prévus des moyens servant à chiffrer au moins en partie les données d'informations (28) devant être transmises et sachant que des moyens servant à déchiffrer au moins en partie des données d'informations chiffrées transmises sont prévus dans l'appareil terminal (23) au moins au nombre de un, **caractérisé en ce que** le système (20) est réalisé pour répartir les données d'informations (28) dans deux blocs de données (29 - 33) ou plus et pour transmettre les blocs de données (29 - 33) de manière cyclique par l'intermédiaire du canal en amont (24), et **en ce que** le canal d'interaction (25) est réalisé pour transmettre à l'appareil terminal (23), par l'unité de calcul (21) centrale, des informations de déchiffrage (37), lesquelles permettent de fixer le périmètre au sein duquel les données d'informations (28) transmises par l'intermédiaire du canal en amont (24) sont rendues accessibles à l'utilisateur, et **en ce que** l'appareil terminal (23) est réalisé pour déchiffrer au moyen des informations de déchiffrage (37) au moins une composante des données d'informations (28) chiffrées, transmises par l'intermédiaire du canal en amont (24), de manière dynamique selon le modèle de référence, et **en ce que** l'unité de calcul (21) centrale est réalisée pour déterminer ensuite certains contenus de données d'informations, qui peuvent être transmis par un utilisateur à un autre utilisateur, et pour transmettre les informations requises à cet effet conjointement avec les informations de déchiffrage correspondantes par l'unité de calcul (21) centrale à l'appareil terminal (23) de sorte qu'uniquement des données d'informations marquées de manière correspondante sont transmises à au moins un autre appareil terminal, au moyen d'un procédé de transmission, après la transmission sur un appareil terminal par ledit appareil terminal (23).

12. Système selon la revendication 11, **caractérisé par** des moyens servant à la mise en oeuvre du procédé selon l'une quelconque des revendications 2 à 10.

13. Système selon l'une quelconque des revendications 11 ou 12, **caractérisé en ce que** le canal en amont (24) au moins au nombre de un, est réalisé sous la forme d'un canal de diffusion, en particulier sous la forme d'un canal pour une diffusion terrestre, et/ou en ce que le canal en amont (24) au moins au nombre de un est réalisé sous la forme d'un canal unidirectionnel.

14. Système selon l'une quelconque des revendications 11 à 13, **caractérisé en ce que** le canal d'interaction (25) au moins au nombre de un est réalisé sous la forme d'un canal bidirectionnel, et/ou **en ce que** le canal d'interaction (25) au moins au nombre de un est réalisé sous la forme d'un canal de télécommunication, en particulier sous la forme d'un canal de radiotéléphonie mobile.

15. Système selon l'une quelconque des revendications 11 à 14, **caractérisé en ce que** l'appareil terminal (23) au moins au nombre de un est réalisé sous la forme d'un appareil terminal mobile.

16. Système selon l'une quelconque des revendications 11 à 15, **caractérisé en ce que** l'appareil terminal (23) présente un système de communication (48) interne, et **en ce que** le système de communication (48) est réalisé pour coopérer au moins de manière temporaire avec le canal d'interaction (25).

17. Système selon l'une quelconque des revendications 11 à 16, **caractérisé en ce que** l'appareil terminal (23) est réalisé pour coopérer au moins de manière temporaire avec un système de communication (49) externe, et **en ce que** le système de communication (49) est réalisé pour coopérer au moins de manière temporaire avec le canal d'interaction 25).
